# EUROPEAN PATENT APPLICATION

(11) **EP 0 907 154 A2**
(43) Date of publication of application: **07.04.1999**
(21) Application number: 98400659.3
(22) Date of filing: 20.03.1998
(51) Int. Cl.: G07F 7/08

(54) **Electronic purse system having a double-structured purse, ic card applicable to the electronic purse system, ic card transaction apparatus having a double-structured purse, ic card transaction system having a double-structured purse, and ic card applicable to the ic card system**

(30) Priority: 01.10.1997 JP 268891/97
(71) Applicant: FUJITSU LIMITED, Kawasaki-shi, Kanagawa 211-8588 (JP)
(72) Inventor: Nishio, Nobuhiko, Nakahara-ku, Kawasaki-shi, Kanagawa 211 (JP); Asoh, Izumi, Nakahara-ku, Kawasaki-shi, Kanagawa 211 (JP)
(74) Representative: Joly, Jean-Jacques

(57) **Abstract**

In a case of a transaction with high security using a transfer device (2), a deposited amount is transferred from a first purse (first purse area (1A)) of an IC card (1) to a second purse (second purse area (1B)) through personal authorization by using a code number, and in a case of a transaction with low security through a device in the user's side, personal authorization is not required, and an amount of money for payment is executed with the second purse of the IC card.

## Description

### FIELD OF THE INVENTION

The present invention relates to an electronic purse system for handling electronic cash with an IC card, an IC card for the same, an IC card transaction apparatus having a double-structured purse, an IC card transaction system having a double-structured purse, and an IC card for the same.

### BACKGROUND OF THE INVENTION

In recent years, there has become widespread an IC card with a rewritable and non-volatile memory as well as a microcomputer incorporated therein, and on the other hand, there have been proposed various types of "electronic purse system" in which a transaction with a bank and a purchase of commodities at shops can be performed with an IC card-formed carrier body by transferring some of a deposited amount of a bank account to this IC card between financial institutions.

In a conventional type of electronic purse system, one unit of purse is generally provided in an IC card, to which a desired amount of money is transferred through a terminal, or from which payment is made through a terminal. In addition, a high security function is generally added to the electronic purse of the IC card to enhance the securities, and for this reason there have been a delay in operations and a delay in processing when the processing for a transaction is actually executed.

Especially, in a case of the conventional type of electronic purse system, if any external device accesses one memory area in the IC card, so-called the processing for verification is executed in which a code number of a card holder is verified inside the card and authorized, then identification code of the device is inputted, whether the device is allowed to access the memory area or not is checked, and the access to the area is eventually allowed after all of the processing are finished.

Also, to enhance the security, when information is transferred between an IC card and a terminal, the information is ciphered and transferred, and as a method of ciphering the information, there is employed what is called the authorization processing in which a device and an IC card each have a public key or a secret key respectively and cipher the information after the keys are exchanged therebetween for each time when the transaction processing is executed in some cases. As this ciphering system, there are systems such as the RSA system and the DES system in which a device and an IC card have key information in common use, or systems in which a device and an IC card have a public key or a secret key respectively and cipher or de-cipher information transmitted in a common algorithm, which are generally employed. On the other hand, the way of using an IC card is considered in many occasions. The IC card is used in various cases such as a POS (Point Of Sale) system for ordinary shops and super markets or the like, a medical card system for hospitals, an amusement system for amusement places such as a place for pachinko (a pinball game), a betting system such as a horse racing, a ticket system for public telephone units and transportation or the like.

A similar technology to the above technology is disclosed, for instance, in Japanese Patent Laid-Open Publication No. HEI 2-205933. According to this Publication, there is disclosed a system in which an IC card is used for cashless payment when commodity is purchased at vending machines or shops. More specifically, a prepaid area and an area for an off-line account are provided in a memory of the IC card used in the system. The prepaid area is used for storing therein balance for transactions in cash with the balance by using a PIN (Personal Identification Number). The off-line account area is used for storing therein balance as an off-line account for transferring the balance to the prepaid area by using a personal authorization number to increase an amount of the balance in the prepaid area.

Although various types of system linked to an electronic purse system are proposed in the conventional types of IC card system as that in the publication cited above, access to a memory in any of the systems is possible from one electronic purse provided in the IC card only when a code number is successfully verified through specified authorization processing or specified verification processing using a PIN or the like. However, countermeasures for security against a case where an IC card is illegally obtained by an unauthorized person is enhanced by the encryption technology, so that there are some problems as described below in linking the electronic purse system to some other systems.

At first, it is required to provide an entry function for executing the authorization processing or verification processing in each device used in the IC card system, and for this reason the configuration of the device has become complicated because of the concerns for security.

In addition, any algorithm and key or the like for ciphering information commonly used in the system on the whole are known by holders of the devices or those concerned with the software such as the people for handling the devices used in each IC card system. With this feature, if any holder intentionally commits illegality, the access to the whole system may become possible, and for this reason, it is impossible to maintain the security. Accordingly, there is the possibility that an illegal transaction with a large amount of money may occur in the whole system, so that using a card in a wide area or a multi-use of one card is not preferable considering the aspect of the security.

Also, from a user's point of view, operations are troublesome because entry of a code number is required any time when the device is used by entering a PIN for transaction like in the Publication (Japanese Patent Laid-Open Publication No. HEI 2-205993) or the like. The processing for verification as described above is executed in the system, so that quite a long time is required for the processing until the transaction is actually finished. As described above, if an unnecessarily long time for transaction is required, use of the card for transaction is not preferred in urgent cases such as a case of busy hours in super markets, a case of purchasing tickets just before some horse race starts in a betting system, or a case of purchasing tickets right before some train departs in the ticket vending system.

When the card is used in some amusement place, there is the problem such as that, even if a user previously decides in his or her mind how much is to be used on that day, all his (her) money in the purse may eventually be spent before being aware of it, but as far as the current system is concerned, it is impossible to restrict an amount of money to be used in the electronic purse because the system allows all amount of money in the electric purse to be used.

It is a first object of the present invention to provide an electronic purse system having a double-structured purse in which convenience in use as a prepaid card is improved in a purse with lower security and the security is further improved in a purse with higher security by making use of the characteristics as a double-structured purse for an IC card.

It is a second object of the present invention to provide a double-structured purse, namely an IC card applicable to the electronic purse system providing the first object.

It is a third object of the present invention to provide an IC card transaction apparatus having a double-structured purse in which the security on the IC card as a double-structured purse can further be improved.

It is a fourth object of the present invention to provide an IC card transaction system having a double-structured purse enabling realization of card transactions in which the convenience in use as a prepaid card is improved in a purse with lower security and the security is further improved in a purse with higher security by making use of the characteristics as a double-structured purse (IC card).

It is a fifth object of the present invention to provide an double-structured purse, namely an IC card applicable to the IC card transaction system providing the fourth object.

In order to solve the problems and achieve each of the objects, the electronic purse system having a double-structured purse according to the present invention comprises a portable type of card-formed carrier body comprising a first rewritable and non-volatile memory in turn having a first area in which a first deposited amount is stored and a second area in which a second deposited amount is stored, a processor connected to the memory, a second non-volatile memory with an operation program for the processor stored therein, and an I/O terminal for accessing information stored in the first and second non-volatile memories respectively via the processor, in which at least an individual's authorization number of a card holder in response to the first area of the first non-volatile memory is stored in the first non-volatile memory, identification information indicating types of apparatuses allowing, in response to the second area of the first non-volatile memory, access to the second area is stored in the first non-volatile memory, when accessing the first area, ciphered information received from the I/O terminal is de-ciphered, access is permitted if a code number included in the de-ciphered information and the individual's authorization number stored in the first non-volatile memory satisfy a prespecified relation, and when accessing the second area, access to the second area is permitted if an identification number indicating a type of accessible transaction apparatus coincides with that stored in the first non-volatile memory; a central system having an account file with deposited amounts stored therein; a withdrawing machine directly or indirectly communicating with the central system for transferring all or a portion of a deposited amount in the central system to the first area of the memory in the card-formed carrier body, which ciphers at least either one of identification information for the apparatus and a code number inputted by the card holder and transfers the ciphered information or number to the card-formed carrier body; an input unit for inputting a code number and a amount of money to be transferred from the first area to the second area in the card-formed carrier body; a transfer unit for supplying the code number, amount of money to be transferred, and identification information inputted by the input unit to the card-formed carrier body; and a device in the user's side for transmitting an amount of money used and the apparatus information to use a deposited amount stored in the second area of the card-formed carrier body; and the card-formed carrier body updates the first area, when transfer is instructed by the transfer unit and the individual's authorization number is accepted, by subtracting a specified amount of money from the deposited amount stored in the first area, and also writes the specified amount of money in the second area, and allows, when an amount of money to be used is instructed from the device in the user's side and at the same time access to the second area is permitted according to the identification information, use of the instructed amount of money with the device in the user's side by subtracting the amount of money to be used.

With the electronic purse system having a double-structured purse according to the present invention, in a case of a transaction using the transfer unit, a deposited amount is transferred from the first area (first purse) of the card-formed carrier body to the second area (second purse) through personal authorization with the code number, and in a case of a transaction using the device in the user's side, an amount of money to be used is used in the second area of the card-formed carrier body without requiring the personal authorization, so that characteristics as a double-structured purse are made use of, and for this reason convenience in use as a prepaid card can be improved in a purse with lower security, on the other hand, the security can further be improved in a purse with higher security.

In the electronic purse system having a double-structured purse according to the present invention, a program making the second area allow only the withdrawal processing may be stored in the second non-volatile memory of the card-formed carrier body.

In the electronic purse system having a double-structured purse according to the present invention, identification information for a device in the user's side and a code number each allowing access to a third area are registered in the third area provided in the card-formed carrier body, and addition or subtraction in the third area may be allowed when identification information and a code number corresponding to registered information are received from the device in the user's side.

In the electronic purse system having a double-structured purse according to the present invention, identification information indicating the device in the user's side subjected to addition and an amount of added money may be stored as historical information in the third area of the card-formed carrier body.

In the electronic purse system having a double-structured purse according to the present invention, the card-formed carrier body skips, when the device in the user's side demands payment without specifying any area in the first non-volatile memory, the processing for de-ciphering the transferred information from the device in the user's side, and allows transaction for subtracting information on the specified amount of money from the second deposited amount.

With the electronic purse system having a double-structured purse according to the present invention, when the device in the user's side demands payment without specifying any area, it is possible to realize, by using a deposited amount in the second area, a simple and less-secured transaction which does not require personal authorization.

The IC card applicable to an electronic purse system having a double-structured purse according to the present invention comprises a memory in which a first purse with a first amount of money stored therein, a second purse with a second amount of money stored therein, a payment processing program, and a user's code number program are stored; a processing circuit for executing payment processing according to the payment processing program stored in the memory; a communicating unit for executing communications with external devices; and the payment program executes payment processing according to the second amount of money stored in the second purse when a payment command is received from an external payment demanding device without any purse being specified, and verifies the code and executes the payment processing to the external device according to the amount of money stored in the first purse when a payment command based on specification of the first purse is received.

With the IC card applicable to an electronic purse system having a double-structured purse according to the present invention, when no purse is specified from an external device, payment is executed according to the second amount of money stored in the second purse, and when the first purse is specified from an external device, payment with the first purse is executed after a code number is verified, so that much expense in time and effort such that a code number needs to be verified for the second purse with lower security is omitted so that convenience in use can be improved, and at the same time the first purse with higher security can be prevented from illegal access by requiring personal authorization.

The IC card applicable to an electronic purse system having a double-structured purse according to the present invention comprises a memory in which a first purse with a first amount of money stored therein, a second purse with a second amount of money stored therein, a payment processing program, and an ciphering/de-ciphering program are stored; a processing circuit for executing payment processing according to the payment processing program stored in the memory; a communicating unit for executing communications with external devices; and an interface unit for managing interface with external transaction devices; and the payment program executes the payment processing according to the second amount of money stored in the second purse when a payment command not based on specification of the first purse is received via the interface unit from an external device, and communicates with the external device using the ciphering and de-ciphering program and executes the payment processing to the external device according to the amount of money stored in the first purse when a payment command based on specification of the first purse is received.

With the IC card applicable to an electronic purse system having a double-structured purse according to the present invention, when no purse is specified from an external device, payment is executed according to the second amount of money stored in the second purse, and when the first purse is specified from an external device, payment with the first purse is executed through ciphering and de-ciphering the information, so that much expense in time and effort such that a code number needs to be verified for the second purse with lower security is omitted, and for this reason convenience in use can be improved and at the same time a function of preventing illegal access can further be improved in the first purse with higher security by using ciphered information.

The IC card transaction apparatus according to the present invention selects either one of an amount of money stored in an IC card and an amount of money stored in a center account and executes payment in cash according to the selected amount of money; and the apparatus comprises a detecting unit for detecting insertion of an IC card; an accepting unit for accepting specification of an arbitrary mode after insertion of the IC card is detected by the detecting unit; and a mode switching unit for switching from the center account to a mode for payment in cash when specification of an arbitrary mode is not accepted in the accepting unit within a preset period of time after insertion of the IC card is detected.

With the IC card transaction apparatus according to the present invention, in a transaction between a transaction apparatus and an IC card, when specification of an arbitrary mode is accepted within a preset period of time, using a center account is allowed, and when the specification is not accepted, the mode is switched to payment in cash, so that a transaction through a center account has variations in modes, and simplification of the transaction in cash can be realized by omitting operations required for specifying the transaction in cash.

The transaction apparatus according to the present invention executes transaction with an IC card having a first purse and a second purse, and the transaction apparatus executes transaction making use of the amount of money stored in the second purse, when a demand for payment is received based on specification of the first purse, if it is turned out, after the demand for payment is authorized according to the ciphered information and code number, that the amount of money stored in the first purse is less than the amount of money required for the transaction.

With transaction apparatus according to the present invention, in a transaction requiring personal authorization between a transaction apparatus and an IC card, the transaction is executed again by making use of an amount of money in the second purse even if the transaction is not performed only through the first purse because of shortage of an amount of money therein, so that a user can execute a transaction without being concerned about an amount of money for the transaction, and for this reason improvement in the operability can be achieved.

The IC card applicable to an IC card transaction system according to the present invention has a first purse and a second purse and is used for transaction making use of the double-structured purse consisting of the first purse and second purse with the transaction apparatus, and when a code number is received from the transaction apparatus, the processing for authorizing the individual is executed with the received code number and amounts of money to be stored in the first and second purses respectively are outputted to the transaction apparatus, and on the other hand, when a code number is not received from the transaction apparatus, an amount of money for the second purse is outputted to the transaction apparatus.

With the IC card applicable to an IC card transaction system according to the present invention, in a transaction between a transaction apparatus and an IC card, amounts of money for the first and the second purses are outputted to the transaction apparatus only when the personal authorization is executed, and if not, only an amount of money for the second purse is outputted to the transaction apparatus, so that the first purse with high security can be prevented from being opened unless the information can pass through the operations for the personal authorization even if a transaction is such a small one that contents of the purse is let to know to a transaction apparatus for an inquiry or the like.

Other objects and features of this invention will become understood from the following description with reference to the accompanying drawings.

### BRIEF DESCRIPTION OF THE DRAWINGS

Fig. 1 is a block diagram showing one example of the electronic purse system according to Embodiment of the present invention;
Fig. 2 is a block diagram functionally showing the IC card shown in Fig. 1;
Fig. 3 is a block diagram showing hardware of the IC card shown in Fig. 1;
Figs. 4A and 4B are views each showing an example of the memory configuration of the IC card shown in Fig. 3;
Fig. 5 is a block diagram functionally showing the withdrawing machine shown in Fig. 1;
Fig. 6 is a view of configuration schematically showing the central system shown in Fig. 1;
Fig. 7 is a block diagram functionally showing the device in the user's side shown in Fig. 1;
Fig. 8 is a flow chart for explaining the main operations of the IC card according to Embodiment of the present invention;
Fig. 9 is a flow chart for explaining the main operations of the IC card according to Embodiment of the present invention;
Fig. 10 is a flow chart for explaining the transfer processing in the main operations shown in Fig. 8;
Fig. 11 is a flow chart for explaining the transfer processing in the main operations shown in Fig. 8;
Fig. 12 is a flow chart for explaining the payment processing in the main operations shown in Fig. 8;
Fig. 13 is a flow chart for explaining the payment processing in the main operations shown in Fig. 8;
Fig. 14 is a flow chart for explaining additional transaction in the processing for payment shown in Fig. 12;
Fig. 15 is a flow chart for explaining the card deposit processing in the main operations shown in Fig. 8;
Fig. 16 is a flow chart for explaining the card deposit processing in the main operations shown in Fig. 8;
Fig. 17 is a flow chart for explaining the processing for de-ciphering in Embodiment of the present invention;
Fig. 18 is a flow chart for explaining the processing for ciphering in Embodiment of the present invention;
Fig. 19 is a flow chart for explaining the preprocessing in Embodiment of the present invention;
Fig. 20 is a flow chart for explaining the preprocessing in Embodiment of the present invention;
Fig. 21 is a block diagram showing an example of configuration of an ordinary transaction machine which is an example of the device in the user's side in Embodiment of the present invention;
Fig. 22 is a block diagram showing an example of configuration of an ordinary transaction telephone unit which is an example of the device in the user's side in Embodiment of the present invention;
Fig. 23 is a flow chart for explaining operations for a transaction between the ordinary transaction machine shown in Fig. 21 and the IC card;
Fig. 24 is a flow chart for explaining operations for a transaction between the ordinary transaction machine shown in Fig. 21 and the IC card;
Fig. 25 is a flow chart for explaining operations for a transaction between the ordinary transaction machine shown in Fig. 21 and the IC card ;
Fig. 26 is a flow chart for explaining the operations for transaction between the ordinary transaction telephone unit shown in Fig. 22 and an IC card;
Fig. 27 is a flow chart for explaining the operations for transaction between the ordinary transaction telephone unit shown in Fig. 22 and an IC card;
Fig. 28 is a flow chart for explaining the operations for transaction between the ordinary transaction telephone unit shown in Fig. 22 and an IC card;
Fig. 29 is a flow chart for explaining operations for a transaction between the withdrawing machine and the IC card in Embodiment of the present invention;
Fig. 30 is a flow chart for explaining operations for a transaction between the withdrawing machine and the IC card in Embodiment of the present invention;
Fig. 31 is a flow chart for explaining operations for a transaction between the withdrawing machine and the IC card in Embodiment of the present invention;
Fig. 32 is a flow chart for explaining operations for a transaction between the withdrawing machine and the IC card in Embodiment of the present invention;
Fig. 33 is a view showing one example of a display screen during the operations for a transaction by the withdrawing machine in Embodiment of the present invention;
Fig. 34 is a block diagram showing an example of configuration of the ATM as one example of the withdrawing machine in Embodiment of the present invention;
Fig. 35 is a flow chart for explaining operations for a transaction between the ATM shown in Fig. 34 and the IC card;
Fig. 36 is a flow chart for explaining operations for a transaction between the ATM shown in Fig. 34 and the IC card;
Fig. 37 is a flow chart for explaining operations for a transaction between the ATM shown in Fig. 34 and the IC card;
Figs. 38A to 38E are views each showing one example of a display screen during the operations for a transaction by the ATM in Embodiment of the present invention; and
Figs. 39A to 39D are views each showing one example of a display screen during the operations for a transaction by the ATM in Embodiment of the present invention.

### DESCRIPTION OF THE PREFERRED EMBODIMENT

Detailed description is made hereinafter for the electronic purse system having a double-structured purse according to the present invention, the IC card applicable to the electronic purse system, the IC card transaction apparatus having the double-structured purse, the IC card transaction system having the double-structured purse, and the IC card applicable to the IC card transaction system with reference to the accompanying drawings.

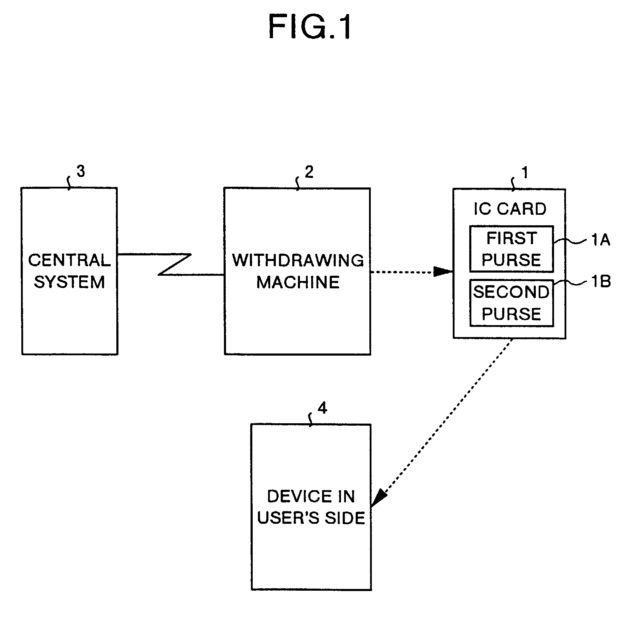

At first, description is made for the system configuration. Fig. 1 is a block diagram showing one example of the electronic purse system (including the IC card transaction system) according to Embodiment of the present invention. The electronic purse system shown in Fig. 1 comprises an IC card 1, a withdrawing machine 2 which is a transaction apparatus with the IC card 1, a device in the user's side 4 which is a transaction apparatus with the IC card 1, and a central system 3.

The IC card 1 has a function of a double-structured purse consisting of a first purse 1A with higher security requiring a code number (indicating a PIN) and encryption for a transaction and a second purse 1B with lower security not requiring a code number nor encryption for a transaction. The withdrawing machine 2 has an IC card removably inserted thereinto and stores a deposited amount withdrawn through communications with a central system 3 of a bank or the like in the first purse 1A of the IC card 1.

The central system 3 manages deposited amounts for users as a bank does and executes withdrawal of the deposited amounts through communications with equipment such as the withdrawing machine 2. The device in the user's side 4 has the configuration in which an IC card can freely be inserted thereto or removed therefrom, and provides various types of service corresponding to an amount of money stored in the second purse 1B of the IC card.

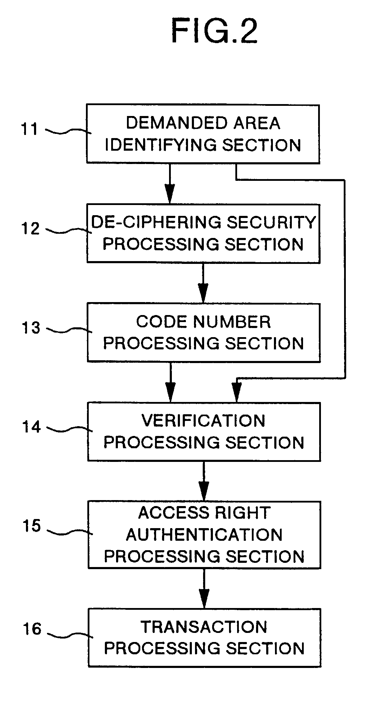

Next detailed description is made for the IC card 1. At first, description is made for the principle. Fig. 2 is a block diagram functionally showing the IC card 1 shown in Fig. 1. The IC card 1 shown in Fig. 2 provides therein, as a function, a demanded area identifying section 11, a de-ciphering security processing section 12, a code number processing section 13, a verification processing section 14, an access right authentication processing section 15, and a transaction processing section 16.

The demanded area identifying section 11 identifies, when an IC card 1 is inserted into the terminal, whether the IC card demands an area of the first purse 1A or of the second purse 1B, or demands no area. This demanded area identifying section 11 shifts, when no area is demanded, the processing to the verification processing section 14. The de-ciphering security processing section 12 de-ciphers, when it is identified by the demanded area identifying section 11 that either of the areas is demanded, ciphered information received from the terminal with a de-ciphering key.

The code number processing section 13 executes the processing for personal authorization according to a code number. The verification processing section 14 verifies whether the terminal with the IC card 1 inserted therein is a terminal from which access is allowed or not. The access right authentication processing section 15 authenticates whether the terminal has the access right or not from a result of verification. The transaction processing section 16 executes a transaction with the service terminal after it is confirmed that the terminal has the access right.

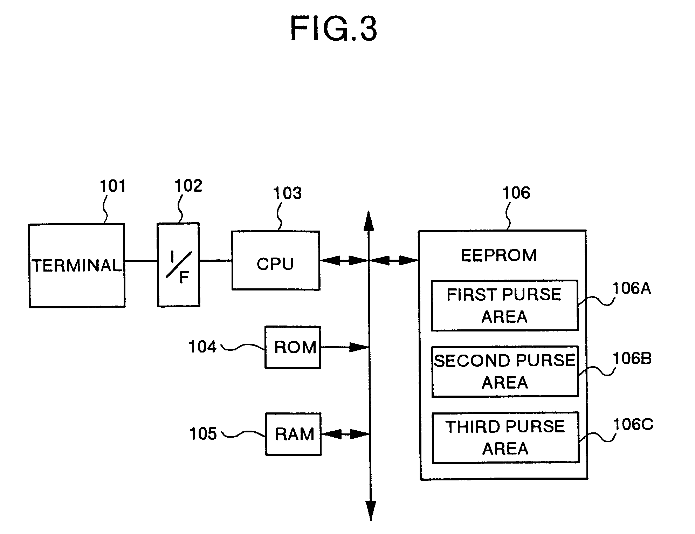

Next description is made for hardware configuration that realizes the principle of the IC card 1. Fig. 3 is a block diagram showing hardware of the IC card 1 shown in Fig. 1. The IC card 1 shown in Fig. 3 comprises a terminal 101 for connecting thereto a service terminal, an interface (I/F) 102 for managing interface between the service terminal and the inside of the IC card, a CPU 103, a ROM 104, a RAM 105, an EEPROM 106 or the like.

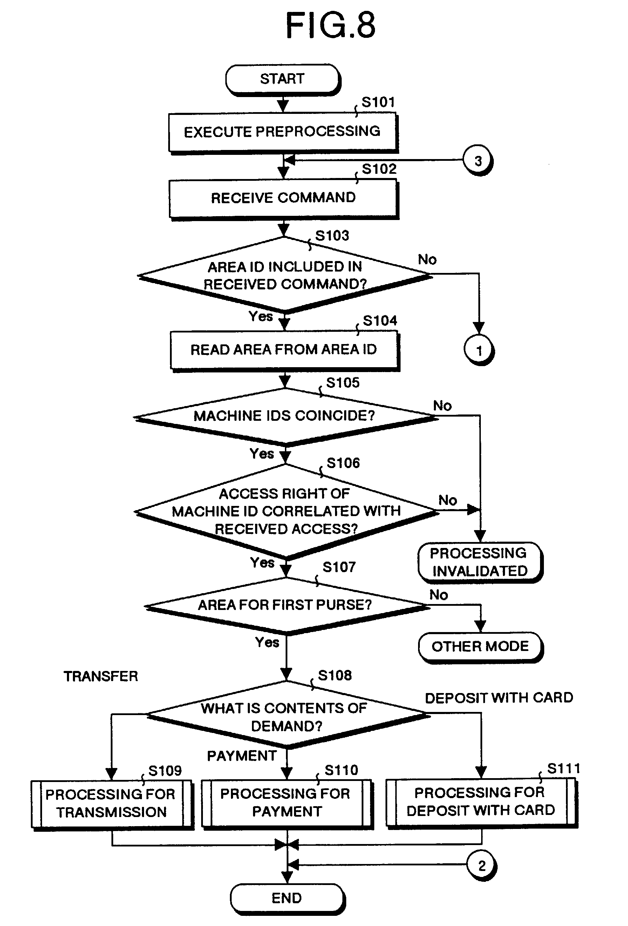

The CPU 103 provides controls over the entire processing according to a program stored in the ROM 104. The ROM 104 stores therein the program according to the flow charts shown in Fig. 8 to Fig. 17 described later. The RAM 105 is used as a work area of the CPU 103.

The EEPROM 106 is a non-volatile memory and has a first purse area 106A and a second purse area 106B used for realizing each function of the first purse 1A and second purse 1B each described above, and a third purse area 106C used for recording historical information of transactions with service terminals.

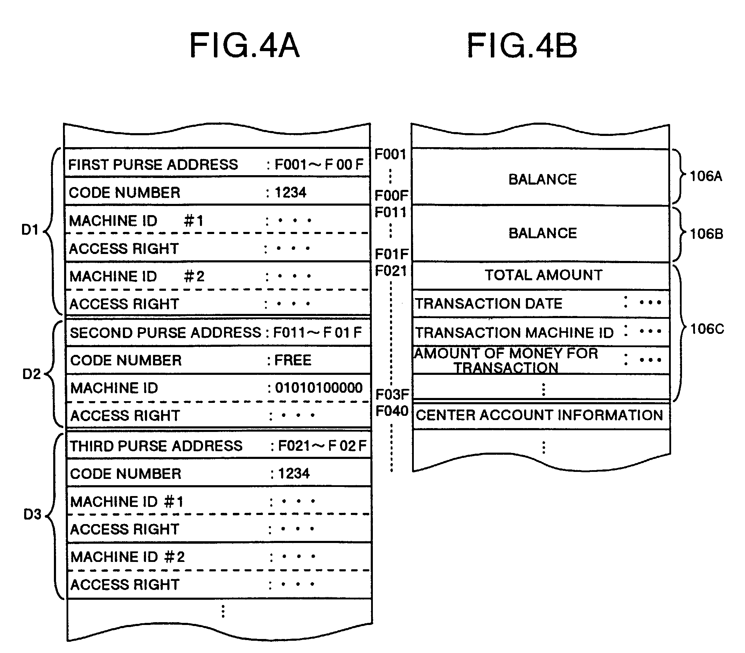

Next description is made for the construction of a double-structured purse of the IC card. Figs. 4A and 4B are views each showing an example of memory configuration of the IC card 1 shown in Fig. 3. The double-structured purse of the IC card 1 is formed with the first purse area 106A and the second purse area 106B. More specifically, the EEPROM 106 of the IC card 1 is divided into a directory area shown in Fig. 4A and a information area shown in Fig. 4B.

The directory area comprises, as shown in Fig. 4A, a first directory D1 of the first purse area 106A, a second directory D2 of the second purse area 106B, and a third directory D3 of the third purse area 106C.

The first directory D1 comprises an address (first purse address) of the first purse area 106A, a code number as a PIN for security in demanding, and a pair of a machine ID of a service terminal and an access right of the machine. In the example shown in Fig. 4A, the first purse address is in a range from "F001 to F00F", the code number is "1234", and the machine IDs and access rights are arbitrarily set corresponding to service terminals #1 and #2, respectively. The access right includes rights for writing, reading, updating, and deleting or the like.

The second directory D2 comprises an address (second purse address) of the second purse area 106B, a code number for making the setting free, and a pair of a machine ID of a service terminal and an access right of the machine. In the example shown in Fig. 4A, the second purse address is in a range from "F011 to F01F", the code number is Free, and the machine ID and access right are arbitrarily set corresponding to a service terminal.

The third directory D3 comprises an address (third purse address) of the third purse area 106C, a code number as a PIN for security in demanding, and a pair of a machine ID of a service terminal and an access right of the machine. In the example of Fig. 4A, the third purse address is in a range from "F021 to F02F", the code number is "1234", and the machine IDs and access rights are arbitrarily set corresponding to service terminals #1 and #2.

Then, the information area shown in Fig. 4B is divided into the first purse area 106A, the second purse area 106B, the third purse area 106C, and information on center accounts as additional information.

Concerning the first purse area 106A, an area is identified according to the first purse address of the first directory D1, in which balance as the first purse is stored. Concerning the second purse area 106B, an area is identified according to the second purse address of the second directory D2, in which balance as the second purse is stored. Concerning the third purse area 106C, an area is identified according to the third purse address of the third directory D3, in which a total amount of the first purse and the second purse and historical information of transactions (transaction dates, transaction machine IDs, amounts of money for transactions) or the like are stored. It should be noted that information such as account numbers in the central system 3 is included in the center account information.

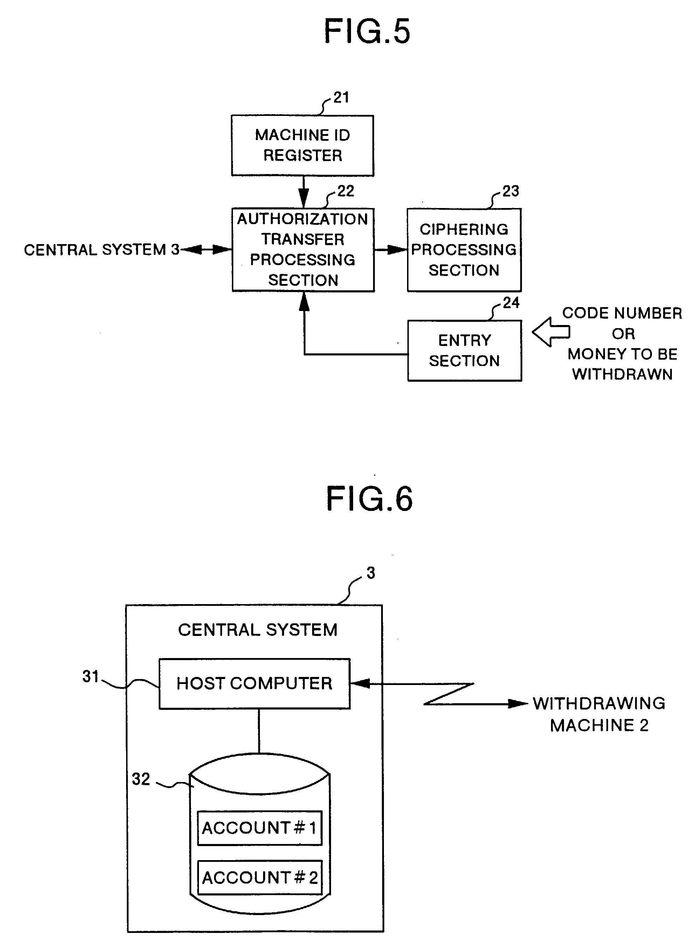

Next detailed description is made for the withdrawing machine 2 shown in Fig. 1. Fig. 5 is a block diagram functionally showing the withdrawing machine 2 shown in Fig. 1. The withdrawing machine 2 shown in Fig. 5 comprises a machine identifying (ID) register 21, an authorization transfer processing section 22, an ciphering processing section 23, and an entry section 24.

The machine ID register 21 stores therein machine IDs each allocated for each machine so that an IC card 1 can identify the machine. The authorization transfer processing section 22 executes authorization according to a code number as well as to an amount of money to be withdrawn when a deposited amount is withdrawn from the central system 3 and transfers the amount of money to be withdrawn to the ciphering processing section 23. The ciphering processing section 23 ciphers the machine ID stored in the machine ID register 21 as well as a code number inputted by the entry section 24 and sends the ciphered information to the IC card 1. The entry section 24 enters therein a code number and an amount of money to be withdrawn through manual operations by a user and sends the entry information to the authorization transfer processing section 22.

Next detailed description is made for the central system 3 shown in Fig. 1. Fig. 6 is a view of configuration schematically showing the central system 3 shown in Fig. 1. The central system 3 shown in Fig. 6 comprises a host computer 31 connected to the withdrawing machine 2 or the like through a line and a database 32 for storing therein information on accounts of depositors.

The host computer 31 accesses the database 32 and executes processing for withdrawing a sum of money from a deposited amount from the withdrawing machine 2 or the like. The database 32 is accessed from the host computer 31 and executes processing for withdrawing a portion or all of the deposited amount from a specified account according to the demand from the host computer 31.

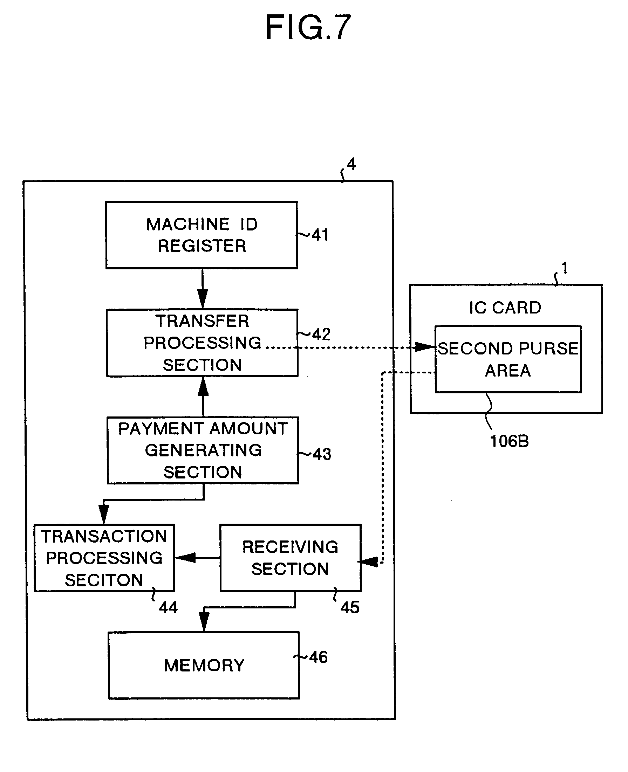

Next detailed description is made for the device in the user's side 4 shown in Fig. 1. Fig. 7 is a block diagram functionally showing the device in the user's side 4 shown in Fig. 1. The device in the user's side 4 shown in Fig. 7 comprises a machine ID register 41, a transfer processing section 42, a payment amount generating section 43, a transaction processing section 44, a receiving section 45, and a memory 46.

The machine ID register 41 stores therein machine IDs each allocated for each machine so that an IC card 1 can identify the machine. The transfer processing section 42 does not require authorization as the withdrawing machine 2 does, receives an amount of money for payment required for receiving service from the payment amount generating section 43, and transfers the amount to the IC card 1. For this transmission, the ciphering processing is not executed to the information. The payment amount generating section 43 generates an amount of money for payment required for receiving service and sends the amount of money for payment to the transfer processing section 42 as well as to the transaction processing section 44.

The transaction processing section 44 executes the processing for transaction according to the amount of money to be paid requested for service provision in response to the demand from the IC card 1. The receiving section 45 receives an amount of money for payment required for the service according to insertion of the IC card 1 therein, sends a report on the reception to the transaction processing section 44, and sends historical information on the services to the memory 46. The memory 46 receives the historical information on the IC card 1 from the receiving section 45 and stores the received history therein.

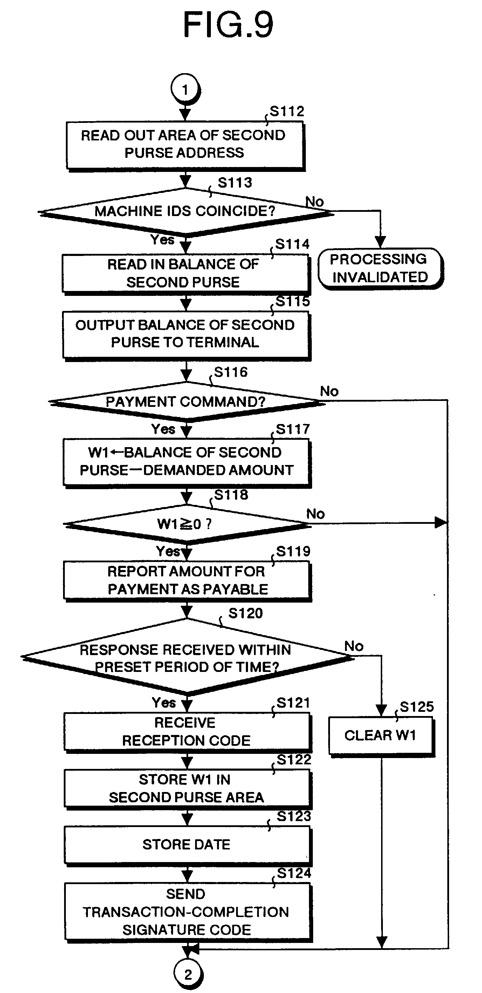

Next description is made operations of the electronic purse system. At first, description is made for operations of the IC card 1. Fig. 8 and Fig. 9 are flow charts for explaining the main operations of the IC card 1 according to Embodiment of the present invention. It should be noted that it is assumed that the IC card 1 has been inserted in a service terminal (withdrawing machine 2 or device in the user's side 4).

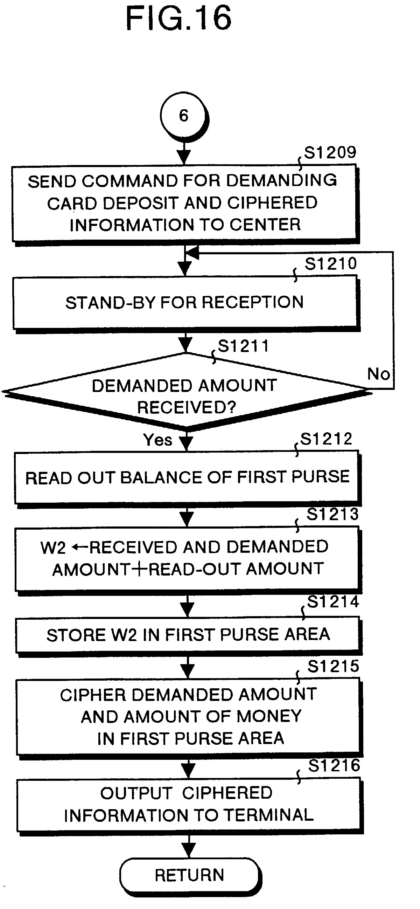

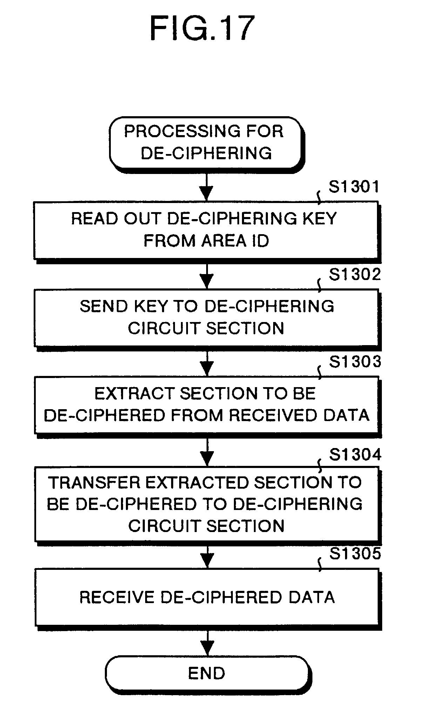

Specifically, the IC card 1 executes, at first, preprocessing with a service terminal (step S101). This preprocessing is executed for checking whether the service terminal is a terminal in which the IC card 1 can be used or not through communications with the service terminal although the detailed description thereof is made later (Fig. 16 and Fig. 17). Then, a command is received from the service terminal (step S102), and determination is made as to whether an area ID demanding either the first purse area 106A or the second purse area 106B is included in the received command or not (step S103). It should be noted that, although a pair of information such as a machine ID and an access right is included in the received command, the area ID is arbitrarily set.

In step S103, if it is determined that the area ID is included in the command, the processing shifts to step S104, and on the other hand, if it is determined that the area ID is not included therein, the processing shifts to step S112 (Refer to Fig. 9).

At first, when the processing shifts to step S104, the processing for reading which of the areas, the first purse area 106A and the second purse area 106B, is demanded is executed from the area ID included in the received command. Further, comparison is made between the machine ID included in the received command and the machine ID stored in the EEPROM 106 of the IC card 1, and if both of the machine IDs coincide with each other, the processing shifts to step S106, and if both of the machine IDs do not coincide with each other, this IC card 1 is regarded as invalid to the service terminal and the processing is invalidated (step S105).

In step S106, a correlation between the access right stored together with the machine ID in the EEPROM 106 and an access right (received access) included in the received command is checked. As a result, if it is determined that both of the access rights are correlated to each other, the processing shifts to step S107, and if it is determined that both of the access rights are not correlated to each other, this IC card is regarded as invalid to access the service terminal and the processing is invalidated.

In step S107, if the area read out in step S104 is the first purse area 106A, then in step S108, the contents of the demand from the service terminal is determined, and on the other hand, if it is determined that the area is the second purse area 106B, the processing is executed as other mode.

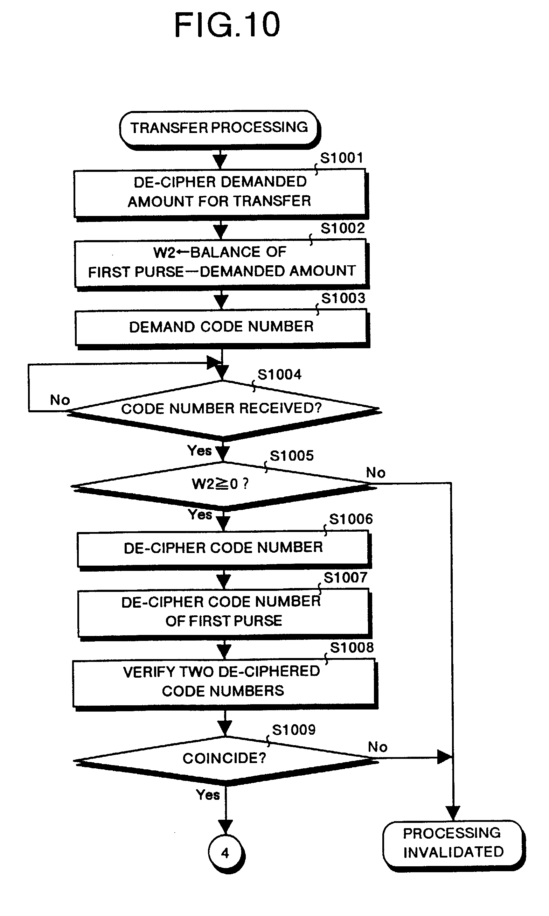

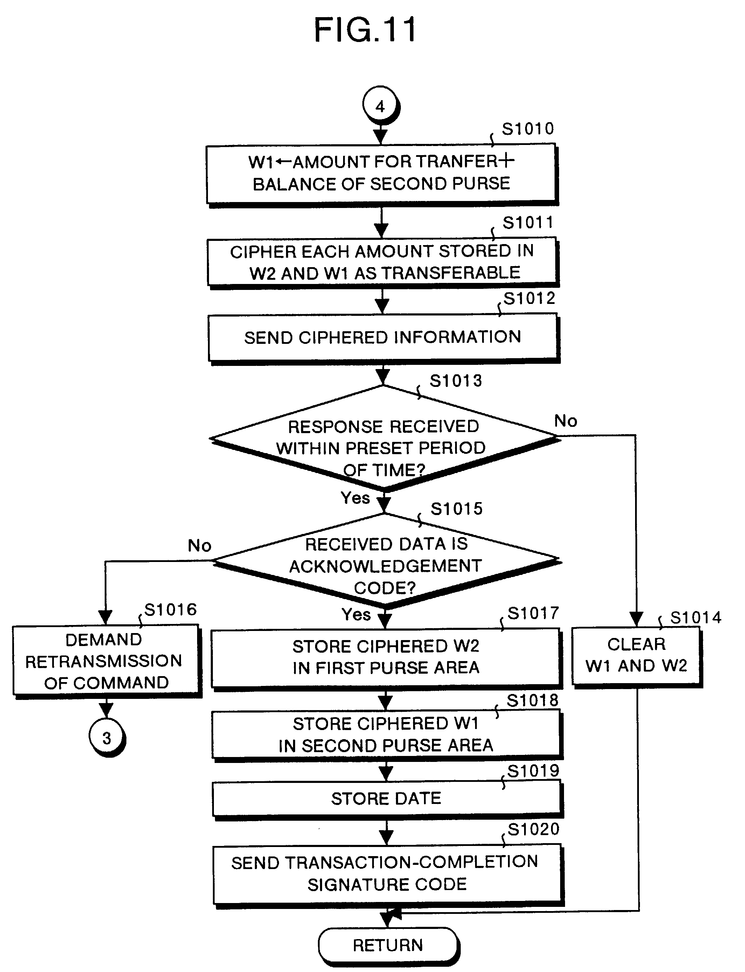

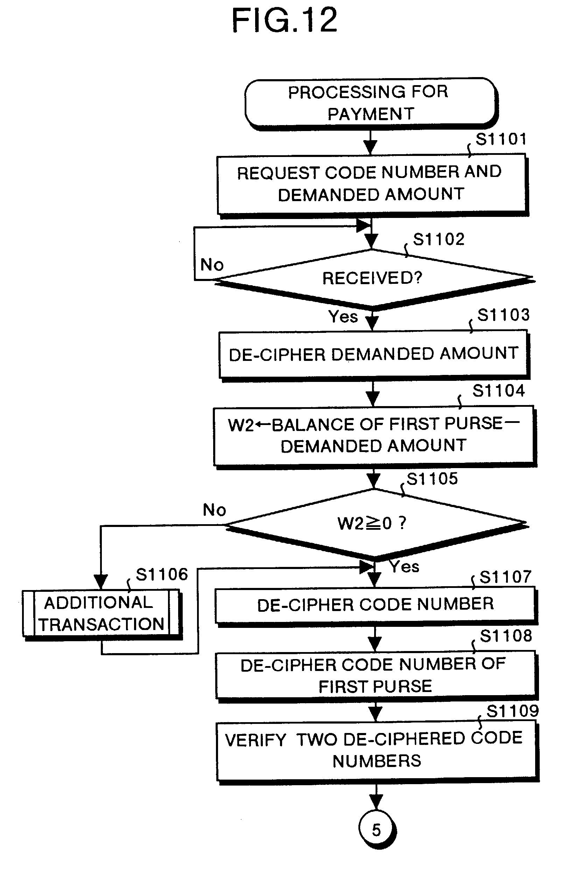

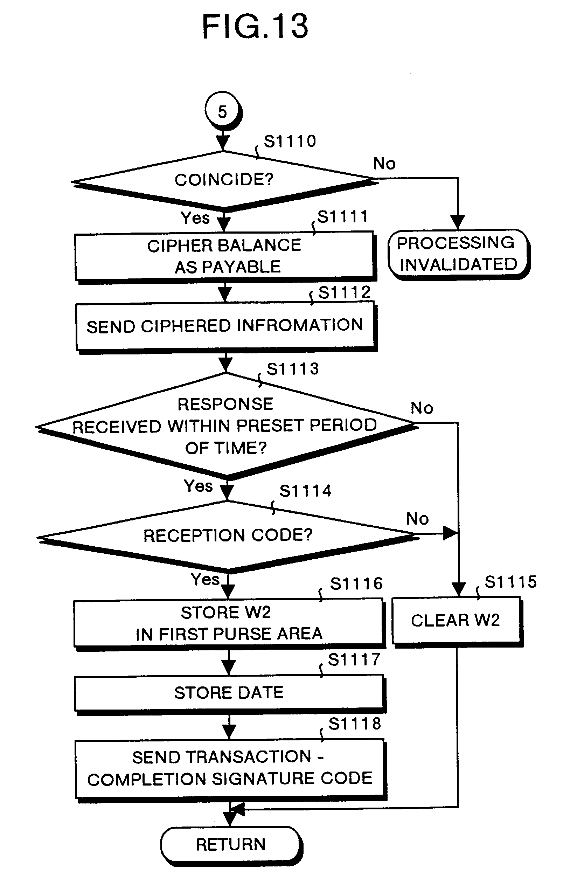

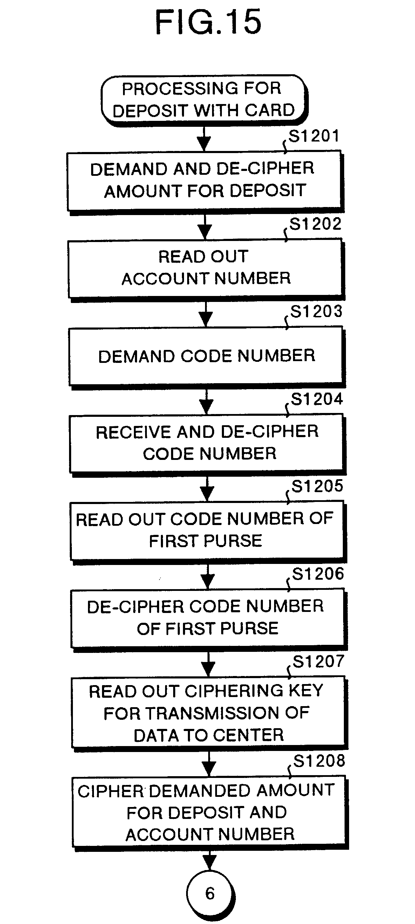

In step S108, if the contents of the demand indicates transmission, the processing shifts to step S109 and executes the processing for transmission (Refer to Fig. 10 and Fig. 11), if the contents thereof indicates a payment, the processing shifts to step S110 and executes the processing for payment (Refer to Fig. 12 and Fig. 13), and if the contents thereof indicates deposit with a card, the processing shifts to step S111 and executes the processing for deposit with a card (Refer to Fig. 15 and Fig. 16). After any of the processing such as the processing for transmission, processing for payment, or processing for deposit with a card is finished, the current processing is finished.

Also, if the area ID is not included in the received command in step S103, the processing in the payment mode is forcefully started. At first, in step S112 (Refer to Fig. 9), the second purse address in the second directory D2 of the EEPROM 106 is forcefully read out. Then, the machine ID stored in the second directory D2 is compared to the machine ID included in the received command, and if both of the machine IDs coincide with each other, the processing shifts to step S114, and if both of the machine IDs do not coincide with each other, this IC card is regarded as invalid to the service terminal and the processing is invalidated.

In step S114, information, namely balance stored in the second purse area 106B is read in from the second purse address read out in step S112. Then, the read-in balance in the second purse area 106B is outputted to the service terminal (step S115). The service terminal side can learn, according to the output of this balance, the amount of money in the second purse. Then, a payment command including an amount to be demanded (an amount to be paid) is outputted to the IC card 1.

Then, when the payment command is received within a preset period of time from the service terminal (step S116), in step S117, an amount for payment demanded by the service terminal, namely a demanded amount is subtracted from the balance stored in the second purse area 106B. The amount of money obtained as a result is stored in the work area W1 previously provided in the RAM 105. It should be noted that, when the payment command is not received in step S116, the transaction for payment with the service terminal is regarded as invalid and the processing is terminated.

Then, if the amount of money stored in this work area W1 is zero or plus (step S118), the payment demanded by the service terminal is possibly made only with the second purse, so that information indicating that the payment is possible and the amount for payment (indicating a demanded amount) are reported to the service terminal (step S119). It should be noted that, when the amount of money in the work area W1 is minus in step S118, the transaction for payment with the service terminal is regarded as invalid and the processing is terminated.

If there is no response, after the report is sent in step S119, to the report from the service terminal even if a preset period of time is over (step S120), the amount of money stored in the work area W1 is cleared, and the transaction for payment with the service terminal is regarded as invalid and the processing is terminated. On the other hand, if the response is received from the service terminal within the preset period of time (step S120), reception code is received from the received response (step S121).

As described above, reception of the reception code from the service terminal indicates that the processing is executed according to the payment in the service terminal, so that the balance in the second purse area 106B is updated. Namely, the amount of money in the work area W1 is stored in the second purse area 106B (step S122), and at the same time the date of the transaction for payment is stored in the third purse area 106C as historical information (step S123). Finally, transaction-completion signature code is sent to the service terminal to report that the processing inside the IC card 1 is completed to the service terminal (step S124).

Next description is made for each operation of the main operations. At first, description is made for the processing for transfer (step S109 in Fig. 8). Fig. 10 and Fig. 11 are flow charts each for explaining the transfer processing in the main operations shown in Fig. 8. This transfer processing assumes a case where the IC card 1 is inserted in the withdrawing machine 2, and a portion (a demanded amount to be transferred) of the balance in the first purse is transferred to the second purse in which the balance has run out by using the withdrawing machine 2. Required for this transfer processing is the processing for ciphering/de-ciphering a code number as a PIN as well as other information for security of the first purse.

In the transfer processing, at first an amount to be demanded for transfer is received from the service terminal, and the demanded amount for transfer is de-ciphered (step S1001). Then, the de-ciphered and demanded amount for transfer is subtracted from the balance stored in the first purse area 106A, and the amount of money is stored in the work area W2 previously provided in the RAM 105 (step S1002). The amount of money stored in this work area W2 indicates the balance in the first purse assuming that the demanded amount for transfer has been transferred from the first purse to the second purse.

This operation indicates an access to the first purse, and for this reason the transaction for transfer itself requires high security, so that personal authorization according to a code number is required. Specifically, a code number is demanded to the service terminal (step S1003). Then, the IC card is waiting for reception for a preset period of time until the code number is sent from the service terminal (step S1004). It should be noted that, if the code number is not received even if the preset period of time is over, the transaction for transfer is terminated, which is not shown in the figure.

Then, when the code number is received from the service terminal (step S1004), and if the amount of money stored in the work area W2 is zero or plus in step S1002 (step S1005), the code number received in step S1004 is de-ciphered (step S1006). On the other hand, if the amount of money stored in the work area W2 is minus (step S1005), this transaction for transfer is regarded as invalid and invalidated.

When the code number is de-ciphered in step S1006, in step S1007, a code number stored in the first directory D1 is read out and de-ciphered. Then, verification is made between the de-ciphered code number of the IC card 1 itself and the de-ciphered code number received from the service terminal (step S1008), and if both of the code numbers coincide with each other (step S1009), the authorization and verification are regarded as valid and the processing shifts to step S1010. On the other hand, when the authorization and verification are not successful, this transaction for transfer is regarded as invalid and invalidated.

In step S1010, the amount of money to be transferred (demanded amount for transfer as described above) is added to the amount of money (balance) stored in the second purse area 106B, and the total amount is stored in the work area W1. The amount of money stored in this work area W1 indicates the balance in the second purse assuming that the amount of money to be transferred has been transferred from the first purse to the second purse.

Then, the processing for transfer can be executed in response to the successful authorization and verification in this transaction for transfer, so that each amount of money stored in the work areas W1 and W2 is ciphered respectively (step S1011). Each amount of money ciphered as described above is sent to the service terminal as ciphered information (step S1012).

Then, if there is no response received from the service terminal within the preset period of time (step S1013), the processing shifts to step S1014, and the work areas W1 and W2 are cleared in order to make the transaction for transfer invalidated. Then, the processing returns to the main processing (Refer to Fig. 8) . On the other hand, if reception of a response is confirmed in step S1013, determination is made as to whether the information received with this received response is acknowledgement code or not (step S1015). This acknowledgement code indicates that the service terminal acknowledge the transfer demanded from a user.

If it is determined in step S1015 that the received information is acknowledgement code, the transaction for transfer is regarded as valid, and at first, the ciphered amount of money in the work area W2 is stored in the first purse area 106A (step S1017), and further the ciphered amount of money in the work area W1 is stored in the second purse area 106B (step S1018). As described above, each of the balances in the first purse area 106A as well as in the second purse area 106B is updated according to the demanded amount of money for transfer. It should be noted that, if it is determined in step S1015 that the received information is not acknowledgement code, the transaction for transfer is regarded as invalid, and then retransmission of a command is demanded to the service terminal in step S1016, and the processing returns to step S102 (Refer to Fig. 8) in the main steps.

Further, stored in the third purse area 106C is information on the date of the transaction for transfer as historical information (step S1019). Finally, transaction-completion signature code is sent to the service terminal to report that the processing inside the IC card 1 is completed to the service terminal (step S1020).

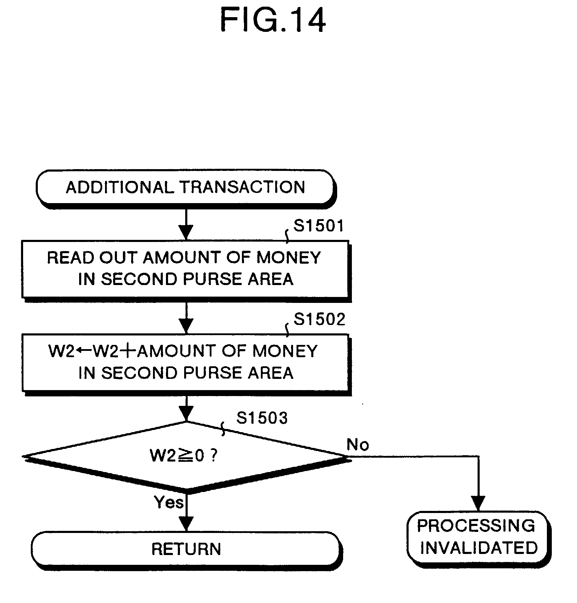

Next description is made for payment operations (step S110 in Fig. 8). Fig. 12 and Fig. 13 are flow charts each explaining the processing for payment in the main operations shown in Fig. 8, and Fig. 14 is a flow chart for explaining additional transaction in the processing for payment shown in Fig. 12. The processing for payment assumes a case where the IC card 1 is inserted in the withdrawing machine 2, and a portion (a demanded amount for transfer) of the balance in the first purse is paid to the withdrawing machine 2 by using the withdrawing machine 2. Required for this payment processing is a code number as a PIN for security of the first purse.

In the payment processing, at first, a code number and a demanded amount of money are requested to the service terminal (step S1101). Then, when the code number and demanded amount of money are received (step S1102), the demanded amount of money is first de-ciphered (step S1103). Then, the de-ciphered and demanded amount is subtracted from the balance stored in the first purse area 106A, and the amount of money remaining in the first purse is stored in the work area W2 in the RAM 105 (step S1104). The amount of money stored in this work area W2 indicates the balance in the first purse assuming that the demanded amount has been paid from the first purse to the withdrawing machine 2.

Then, if the amount of money stored in the work area W2 is zero or plus in step S1104 (step S1105), this time, the code number received in step S1102 is de-ciphered (step S1107). On the other hand, if the amount of money stored in the work area W2 is minus (step S1105), the processing shifts to step S1106 and additional transactions are executed (Refer to Fig. 14).

When the code number is de-ciphered in step S1107, and in step S1108 a code number stored in the first directory D1 is read out and de-ciphered. Then, verification is made between the de-ciphered code number of the IC card 1 itself and the de-ciphered code number received from the service terminal (step S1109), and if both of the code numbers coincide with each other (step S1110), the authorization is regarded as successful and the processing shifts to step S1111. On the other hand, when the authorization is not successful, this transaction for payment is regarded as invalid and invalidated.

In step S1111, the payment can be executed in response to the successful authorization in this transaction for payment, so that the amount of money stored in the work area W2 is ciphered. The amount of money ciphered as described above is sent to the service terminal as ciphered information (step S1112).

Then, if there is no response received from the service terminal within the preset period of time (step S1113), the processing shifts to step S1115, and the work area W2 is cleared in order to make the transaction for transfer invalidated. Then, the processing returns to the main processing (Refer to Fig. 8). On the other hand, if reception of a response is ensured in step S1113, determination is made as to whether the information received with this received response is reception code or not (step S1114). This reception code indicates that the service terminal completes the reception of payment demanded from the user.

If it is determined in step S1114 that the received information is reception code, the transaction for payment is regarded as valid, and the ciphered amount of money in the work area W2 is stored in the first purse area 106A (step S1116). As described above, the balance in the first purse area 106A is updated according to the demanded amount of money for payment.

Further, stored in the third purse area 106C is information on the date of the transaction for transfer or the like as historical information (step S1117). Finally, transaction-completion signature code is sent to the service terminal to report that the processing inside the IC card 1 is completed to the service terminal (step S1118).

Then, an additional transaction (Refer to Fig. 14) in step S1106 is processed as follows. Namely, at first the balance in the second purse area 106B is read out in step S1501, then in step S1502, the read out balance is added to the amount of money having been stored in the work area W2 in step 1104. Namely, the amount of money stored in the work area W2 is updated by means of addition.

Then, if the amount of money stored in the work area W2 updated in step S1502 is zero or plus (step S1503), the processing shifts to step S1504, but if the amount of money stored in the work area W2 is minus (step S1503), because even the balance in the first purse obtained by adding the balance in the second purse thereto is less than the demanded amount of money for payment, the transaction for payment is regarded as invalid and invalidated.

When the processing shifts to step S1504, because the amount obtained by adding the balance in the second purse to that in the first purse reaches the demanded amount of money for payment, the processing as payable one is continued. For this reason, the processing returns to step S1107, and the same processing is executed. However, as the balance in the second purse area 106B is used because this additional transaction is included therein, the amount of money stored in the second purse area 106B is cleared to zero in step S1116 only in a case where this additional transaction is included.

Further description is made for the processing for deposition with a card (step S111 in Fig. 8). Fig. 15 and Fig. 16 are flow charts each for explaining the processing for deposit with a card in the main operations shown in Fig. 8. This processing for deposit with a card is processing for withdrawing a deposited amount from the central system 3 by a demanded amount through the withdrawing machine 2 and storing the withdrawn amount in the IC card 1. A code number as a PIN is required for this card deposit processing for security of the first purse.

At first an amount to be deposited is demanded to a service terminal, and the processing for de-ciphering the demanded amount to be deposited sent from the service terminal is executed (step S1201). This demanded amount is information which the depositor enters with the service terminal. Then, information on the center account is read out from the information area of the EEPROM 106, and the account number included in the center account information is extracted (step S1202).

Then a code number is demanded to the service terminal (step S1203), and when an ciphered code number is received from the service terminal, the ciphered code number is de-ciphered (step S1204). Then a code number of the first purse is read out from the first directory D1 (step S1205), and the code number is de-ciphered (step S1206).

Further, an ciphering key for transmission of information to the center is read out from an area ID sent from the service terminal (step S1207), and the demanded amount for deposit having being de-ciphered in step S1201 and the account number having been read out in step S1202 are ciphered with the ciphering key for transmission thereof to the center (step S1208). The information ciphered as described above is sent to the center by being added to a command for demanding a card deposit as ciphered information (step S1209).

Then, a standby state is effected for waiting for reception until the demanded amount is sent from the central system 3 (step S1210). When the demanded amount is sent from the central system 3 (step S1211), the balance stored in the first purse area 106A is read out (step S1212). The received and demanded amount is added to the balance in the first purse, the total amount is stored in the work area W2 (step S1213), and the amount stored in the work area W2 is stored in the first purse area 106A. with those operations, the card deposit into the first purse area 106A is completed.

Then, the demanded amount and the balance in the first purse area 106A are ciphered respectively (step S1215), and the ciphered information is outputted to the service terminal (step S1216).

Next description is made for de-ciphering, ciphering, and preprocessing executed in the electronic purse system. At first description is made for the processing for de-ciphering. Fig. 17 is a flow chart for explaining the processing for de-ciphering in Embodiment.

The processing for de-ciphering shown in Fig. 17 is a function added to all of the withdrawing machine 2, device in the user's side 4, and IC card 1 each applicable to the electronic purse system. The function may be realized by DSP (Digital Signal Processor) which is not shown in the figure. When this DSP is applied therein, a de-ciphering circuit section for de-ciphering is provided inside the DSP.

As operations, at first, a de-ciphering key is read out from an area ID (step S1301), and the de-ciphering key is sent to the de-ciphering circuit section of the DSP (step S1302). A information to be de-ciphered is extracted from the received information sent from the service terminal (step S1303), and the extracted section to be de-ciphered is transferred to the de-ciphering circuit section (step S1304). As the de-ciphering circuit section obtains the de-ciphering key as well as the section to be de-ciphered as described above, the processing for de-ciphering thereof is executed in the de-ciphering circuit section at that stage. Then, when the de-ciphered information is received from the de-ciphering circuit section, the processing for de-ciphering is completed (step S1305).

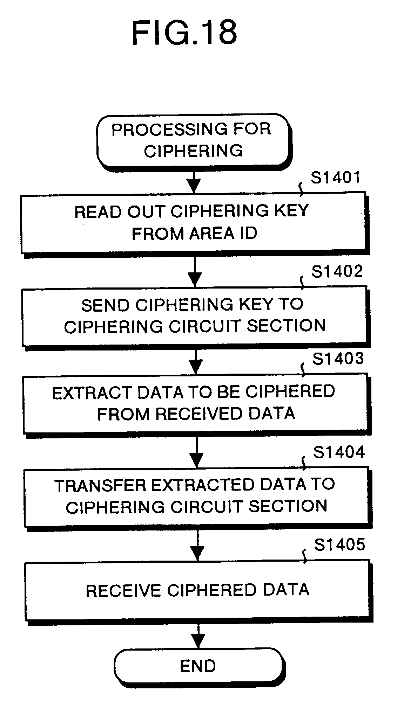

Next description is made for processing for ciphering. Fig. 18 is a flow chart for explaining the processing for ciphering in Embodiment. The processing for ciphering shown in Fig. 18 is a function added to all of the withdrawing machine 2, device in the user's side 4, and IC card 1 each applicable to the electronic purse system. The function may be realized by DSP (Digital Signal Processor) which is not shown in the figure. When this DSP is applied therein, an ciphering circuit section for ciphering is provided inside the DSP.

As operations, at first, an ciphering key is read out from an area ID (step S1401), and the ciphering key is sent to the ciphering circuit section of the DSP (step S1402). A section to be ciphered is extracted from the received information sent from the service terminal (step S1403), and the extracted information is transferred to the ciphering circuit section (step S1404). As the ciphering circuit section obtains the ciphering key as well as the information to be ciphered as described above, the processing for ciphering thereof is executed in the ciphering circuit section at that stage. Then, when the ciphered information is received from the ciphering circuit section, the processing for ciphering is completed (step S1405).

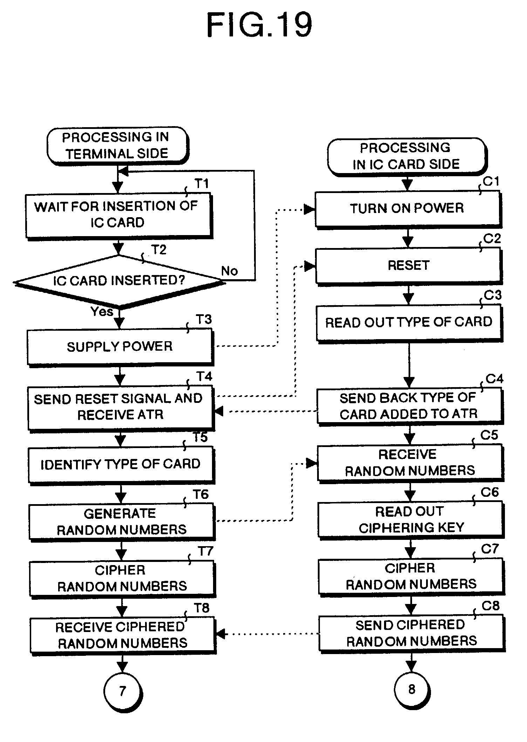

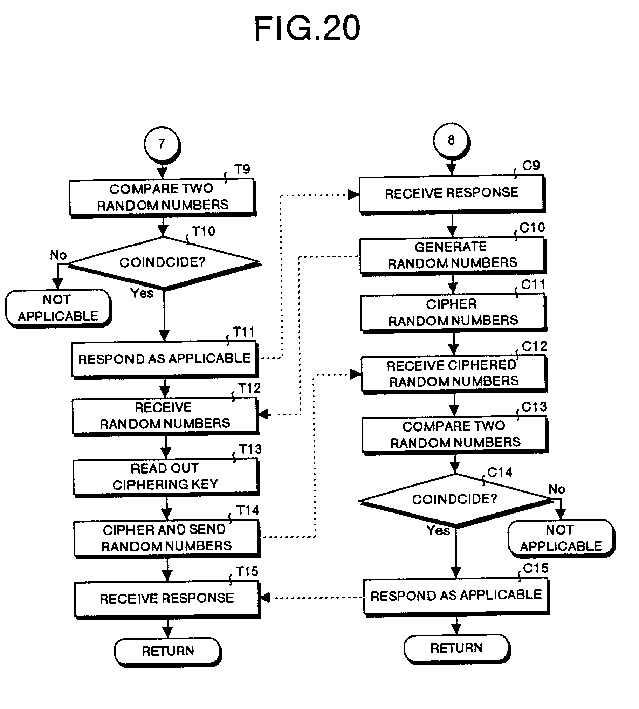

Further, next description is made for preprocessing. Fig. 19 and Fig. 20 are flow charts each for explaining the preprocessing in Embodiment. Fig. 19 and Fig. 20 described below show the processing for communications between the terminal and the IC card 1.

The terminal, at first, waits for insertion of an IC card 1 thereto (step T1), and the insertion thereof is checked for a preset period of time (step T2). When the IC card 1 is inserted into the inserting section of the terminal, the terminal checks how the IC card is set therein from the insertion (step T2). Then, the terminal supplies power to the IC card 1 (step T3), and further sends a reset signal to the IC card 1 (step T4).

The IC card 1 turns ON the power for the card after the power supply is received from the terminal (step C1), and resets the CPU 103 according to the reset signal sent therefrom (step C2). Then, the IC card 1 first reads out types of commercial card (such as a VISA card and a MASTER card) usable with the own IC card 1 through initialization thereof (step C3). The read out types of the card are added to an ATR (Answer To Reset) signal and sent back to the service terminal (step C4).

The terminal receives the types of the card after the reset signal is sent thereto (step T4), and identifies the card usable by the terminal from the types of the card (step T5). It should be noted that, if there is no card available, the transaction is forcefully terminated. Also, if there is any card available, the terminal generates random numbers and sends the random numbers to the IC card 1 (step T6), and at the same time ciphers the random numbers with the ciphering key for its own (step T7).

The IC card 1 reads out, when having received the random numbers sent from the service terminal (step C5), the ciphering key for its own (step C6), and ciphers the received random numbers with the ciphering key (step C7) . The IC card 1 further sends the ciphered random numbers to the service terminal (step C8), and waits for a response from the service terminal.

The terminal compares, when having received the ciphered random numbers from the IC card 1 (step T8), the random numbers ciphered by the terminal to those ciphered by the IC card 1 (step T9). Then, if it is determined that the two ciphered random numbers coincide with each other (step T10), determination is made according to authorization by the terminal that the IC card 1 is applicable. Accordingly, the terminal sends a response that it is applicable to the IC card 1 (step T11). On the other hand, if it is determined that the two random numbers do not coincide with each other (step T10), it is determined according to authorization by the terminal that the IC card 1 is not applicable, and for this reason this transaction is regarded as invalid and the processing is terminated.

When the response on card's being applicable is sent to the IC card 1 from the terminal, this time the IC card 1 generates, when having received the response (step C9), random numbers. The IC card 1 sends the random numbers to the service terminal (step C10). The IC card 1 ciphers, together with generation of the random numbers, the random numbers with the ciphering key for its own (step C11).

The terminal reads out, when having received the random numbers sent from the IC card 1 (step T12), the ciphering key of the terminal (step T13), and ciphers the sent random numbers with the ciphering key to be sent to the IC card 1 (step T14). Then, the terminal waits for a response from the IC card 1.

The IC card 1 compares, when having received the ciphered random numbers from the service terminal (step C12), the random numbers ciphered by the card to those ciphered by the service terminal (step C13). Then, if it is determined that the two ciphered random numbers coincide with each other (step C14), determination is made according to authorization by the IC card 1 that the terminal is applicable. Accordingly, the IC card 1 sends a response that it is applicable to the service terminal (step C15). On the other hand, if it is determined that the two random numbers do not coincide with each other (step C14), it is determined according to authorization by the IC card 1 that the service terminal is not applicable, and for this reason this transaction is regarded as invalid and the processing is terminated.

It should be noted that the terminal starts, when having received the response on terminal's being applicable (step T15) from the IC card 1, the transaction, but when having received the response on terminal's not being applicable, the terminal stops the transaction with the IC card 1.

As described above, any transaction is not started in the preprocessing unless the terminal recognizes the applicability of the IC card 1 and vice versa, so that an electronic purse system can be realized with high security insured.

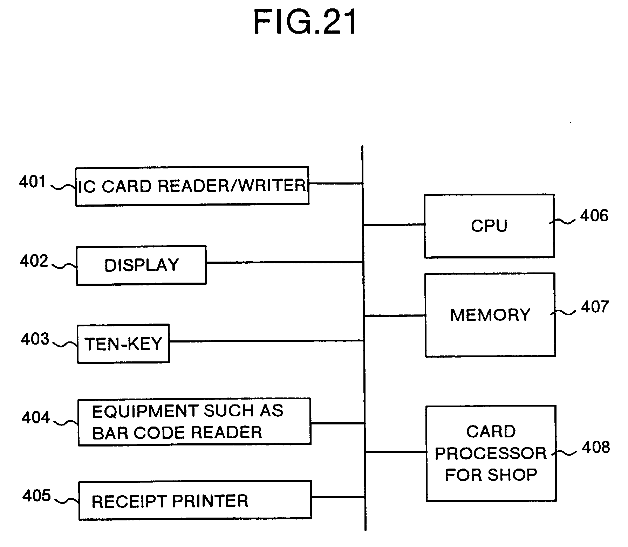

Next description is made for the device in the user's side 4 with a particular example thereof. Fig. 21 is a block diagram showing an example of configuration of an ordinary transaction machine which is an example of the device in the user's side in Embodiment. The ordinary transaction machine shown in Fig. 21 is located in a place for playing pachinko (pinball game center) and provides controls for discharging balls for pachinko or executes the processing for exchanging the balls to cash or the like by using the IC card.

The ordinary transaction machine shown in Fig. 21 comprises an IC card reader/writer 401, a display 402, a ten-key 403, equipment 404 such as a bar code reader, a receipt printer 405, a CPU 406, a memory 407, and a card processor 408 for a shop. It should be noted that it is assumed that the processing itself such as discharging of pachinko balls or exchanging from balls to cash is executed by some other device (not shown in the figure) connected to the ordinary transaction machine.

The IC card reader/writer 401 reads information stored in the IC card 1 or writes information therein, when an IC card is inserted therein. The display 402 visually displays thereon information in a transaction. The ten-key 403 comprises numerical keys for entry numerals such as an amount of money to be paid. The equipment 404 such as a bar code reader reads bar code information from a sheet with the bar code recorded thereon. The receipt printer 405 records a result of services such as change to balls or change to cash or the like. The CPU 406 provides controls for processing of the ordinary transaction machine on the whole. The memory 407 comprises a ROM for storing therein a program with which the CPU operates and a RAM used as a work area of the CPU 406. The card processor 408 for a shop is equipment for processing a card specific to the shop.

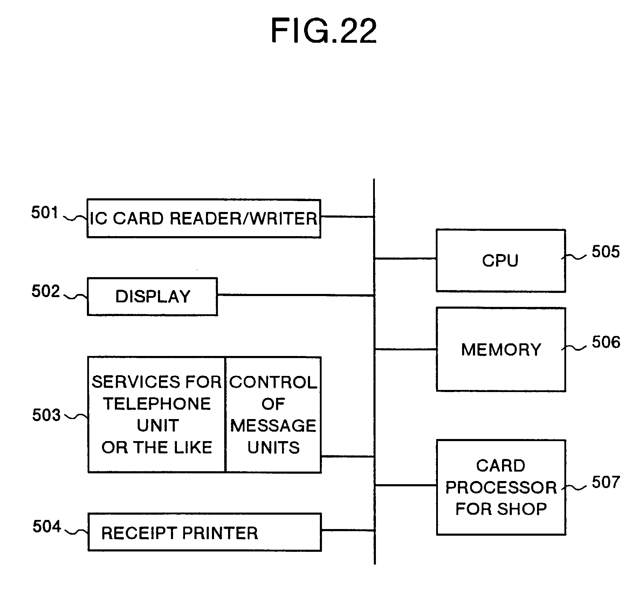

Description is further made for another example of the device in the user's side 4. Fig. 22 is a block diagram showing an example of configuration of an ordinary transaction telephone unit which is an example of the device in the user's side in Embodiment.

The ordinary transaction telephone unit shown in Fig. 22 comprises an IC card reader/writer 501, a display 502, equipment 503 for controlling services for the telephone unit or the like/message units, a receipt printer 504, a CPU 505, a memory 506, and a card processor 507 for a shop.

The IC card reader/writer 501 reads information stored in the IC card 1 or writes information therein, when an IC card is inserted therein. The display 502 visually displays thereon information in a transaction. The equipment 503 for controlling services for the telephone unit or the like/message units is connected to a telephone line not shown in the figure and provides controls for message units for accounting according to a period of time and a call distance or the like when a telephone function is used. The receipt printer 504 records a result of telephone services or the like. The CPU 505 provides controls for processing of the ordinary transaction telephone unit on the whole. The memory 506 comprises a ROM for storing therein a program with which the CPU 505 operates and a RAM used as a work area of the CPU 505. The card processor 507 for a shop is equipment for processing a card specific to the shop.

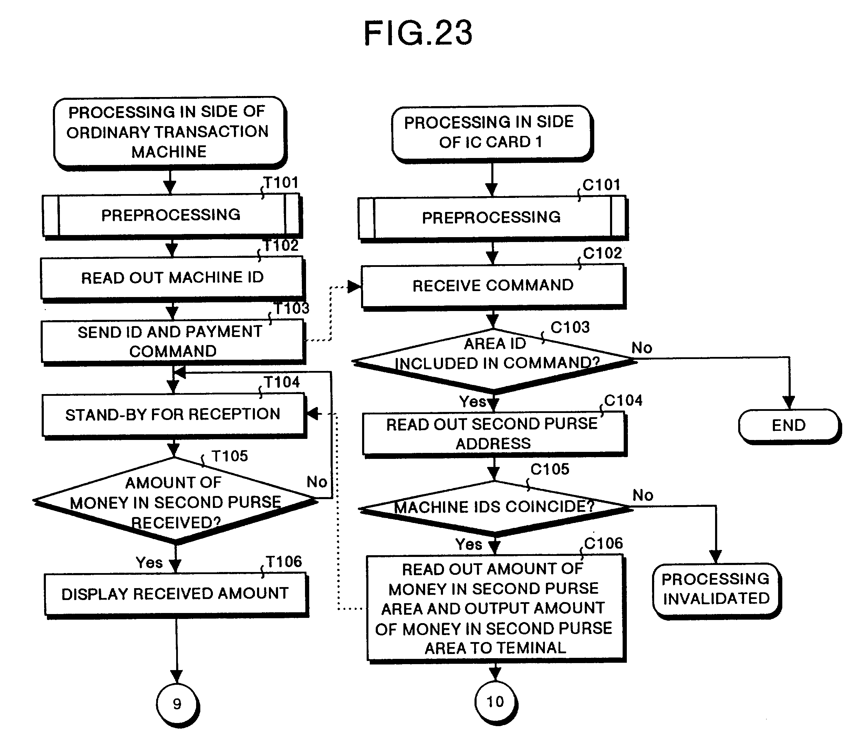

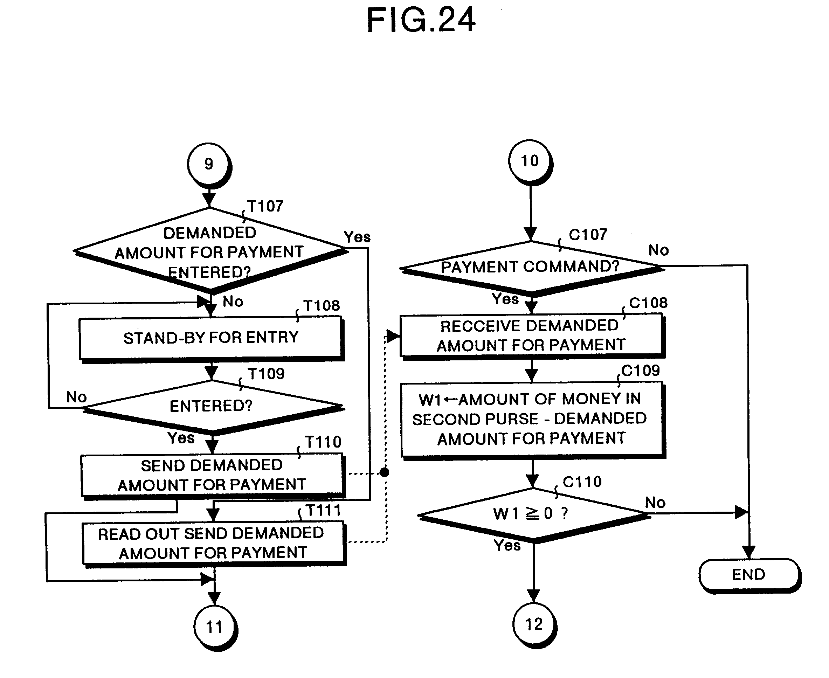

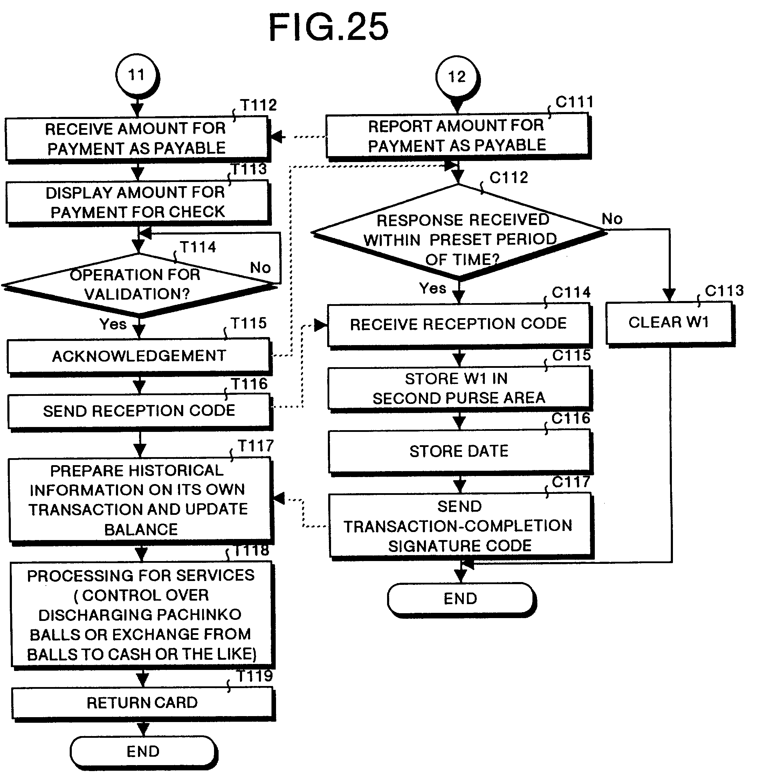

Next description is made for operations of the device in the user's side 4. At first, description is made for operations of the ordinary transaction machine. Fig. 23, Fig. 24 and Fig. 25 are flow charts each for explaining operations for a transaction between the ordinary transaction machine shown in Fig. 21 and the IC card 1. This ordinary transaction machine has no area ID and executes processing according to the machine ID.

The ordinary transaction machine shown in Fig. 21, at first, executes preprocessing (step T101). This preprocessing is executed by the same operations as those of the terminal described above (Refer to Fig. 19 and Fig. 20) . In the IC card 1, on the other hand, the preprocessing is executed (step C101), and contents of the processing are executed according to the charts shown in Fig. 19 and Fig. 20.

When the ordinary transaction machine finishes the preprocessing, the machine ID of the machine is read out (step T102). At this point of time, a display screen requesting entry of a demanded amount for payment is formed on the display 402 of the ordinary transaction machine. In this step, entry of the demanded amount for payment becomes possible, and if the demanded amount for payment is entered thereafter, the amount to be paid is temporarily stored in the memory 407. Then, after a machine ID is sent together with a payment command to the IC card 1 (step T103), the ordinary transaction machine waits for receiving an amount of money in the second purse sent from the IC card 1 (step T104).

The IC card 1 determines, when having received the ID and a command for payment (step C102), whether an area ID is included in the command for payment or not (step C103). If it is determined that the area ID is included in the payment command (step C103), an address of the second purse is read out from the second directory D2 (step C104), and on the other hand, if it is determined that the area ID is not included therein (step C103), this transaction is terminated.

When the processing shifts to step C105, determination is made as to whether the received machine ID coincides with the machine ID of the second directory D2 or not. If it is determined that both of the machine IDs coincide with each other, in step C106, the balance is read from the second purse area 106B according to the second purse address, and at the same time the balance is outputted to the ordinary transaction machine.

The ordinary transaction machine displays, when having received the balance of the second purse from the IC card 1 (step T105), the received amount on the display 402 (step T106). Then, if a demanded amount for payment has been entered at this stage by operations of the ten-key 403 (step T107), the processing shifts to step T111. In step T111, the demanded amount for payment stored in the memory 407 is read out and sent to the IC card 1. Then the processing shifts to step T112.

On the other hand, if the demanded amount for payment is not entered (step T107), the processing waits for entry thereof for a preset period of time (step T108), and the demanded amount for payment is sent, at the stage when it is entered with the ten-key 403 (step T109), to the IC card 1 as it is (step T110). Then the processing shifts to step T112.

The IC card 1 has already received the payment command from the ordinary transaction machine (step C107), and further receives the demanded amount for payment (step C108). In this case, the IC card 1 subtracts the received and demanded amount for payment from the balance in the second purse, and stores the amount of money obtained as a result in the work area W1 (step C109).

Then, if the amount of money stored in the work area W1 is zero or plus (step C110), payment is possible, so that information indicating that the payment is possible and the amount for payment are reported to the ordinary transaction machine (step C111). Then, a standby state is effected for waiting for reception code. On the other hand, if the amount of money stored in the work area W1 is minus (step C110), this transaction is regarded as invalid and the processing is terminated.

The ordinary transaction machine displays, when having received the amount for payment from the IC card 1 as a payable amount (step T112), the received amount for payment on the display 402 so that the user can check (step T113). Then, a standby state is effected for waiting for validation by means of an operation with an Enter key provided in the ten-key 403 (step T114). When the user operates the Enter key, the operation for the validation is accepted (step T114), acknowledgement is sent to the IC card 1 (step T115), and further reception code indicating completion of receiving the amount to be paid is sent thereto (step T116).

The IC card 1 further receives, when reception of the acknowledgement is accepted within a preset period of time (step C112), the reception code (step C114). It should be noted that, if the acknowledgement cannot be accepted within the preset period of time, this transaction is regarded as invalid, so that the work area W1 is cleared (step C113), and the processing is terminated.

After the reception code is received in step C114, the processing shifts to step C115, and an amount stored in the work area W1 is stored in the second purse area 106B. With those operations, the amount to be paid required for exchanging with some service is taken out from the second purse. Then, the history on this transaction (date or the like) is stored in the third purse area 106C (step C116), and finally, the transaction-completion signature code is sent to the ordinary transaction machine (step C117).

The ordinary transaction machine prepares, when having received the transaction-completion signature code from the IC card 1, historical information on its own transaction and updates the balance (step T117), and then executes the processing for services (controls over discharging pachinko balls or exchange from balls to cash or the like) (step T118). Finally, IC card 1 is returned from the IC card reader/writer 401 (step T119).

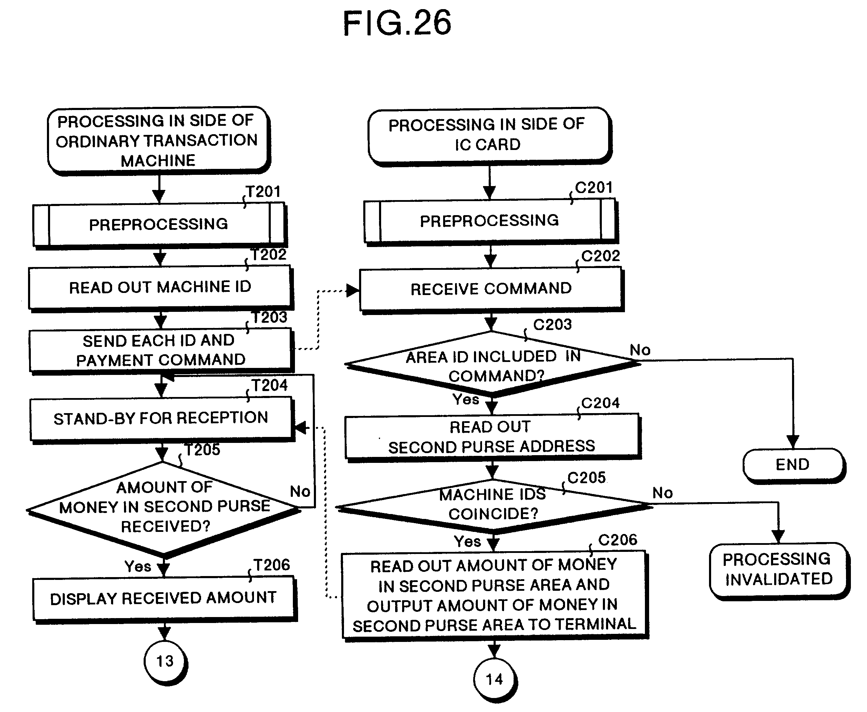

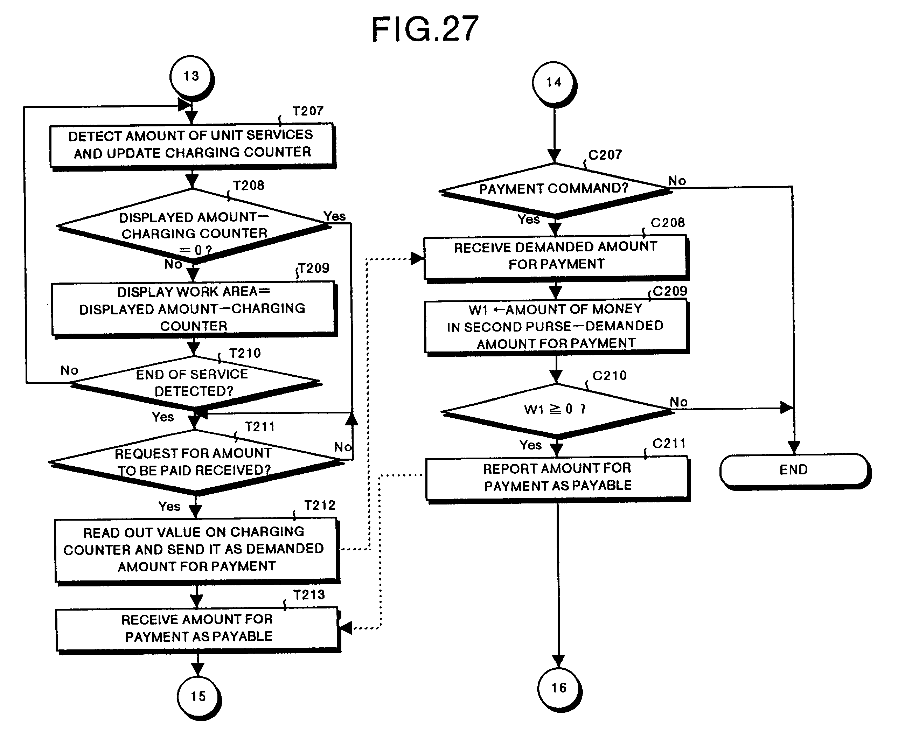

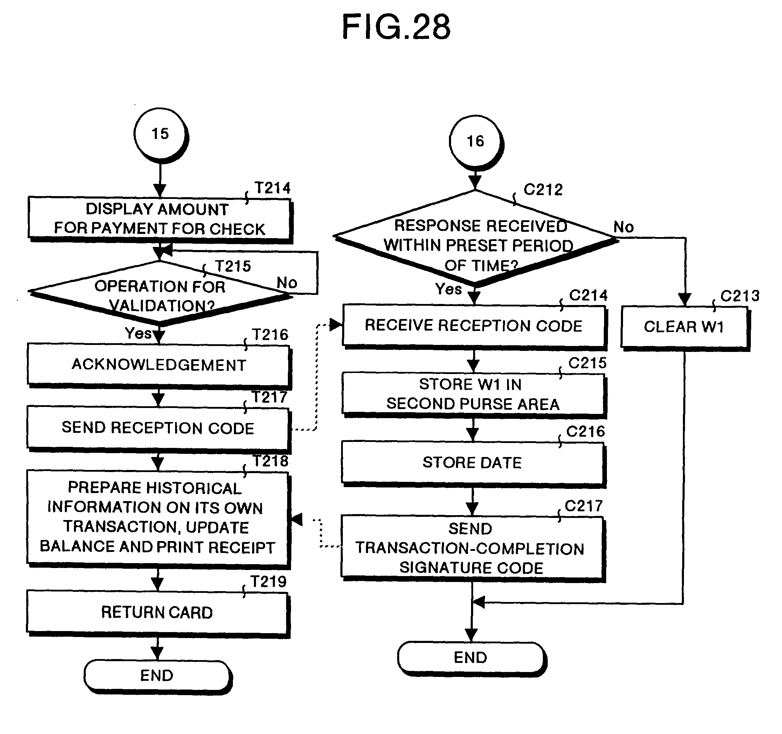

Next description is made for the operations of an ordinary transaction telephone unit. Fig. 26, Fig. 27 and Fig. 28 are flow charts each for explaining the operations for transaction between the ordinary transaction telephone unit shown in Fig. 22 and an IC card 1.

The ordinary transaction telephone unit shown in Fig. 22 executes, at first, preprocessing (step T201). This preprocessing is executed by the same operations as those of the terminal (Refer to Fig. 19 and Fig. 20). In the IC card 1, on the other hand, the preprocessing is executed (step C201), and contents of the processing are executed according to the flow charts shown in Fig. 19 and Fig. 20.

When the ordinary transaction telephone unit finishes the preprocessing, a machine ID of its own is read out (step T202). At this point of time, a display screen requesting entry of a demanded amount for payment is formed on the display 402 of the ordinary transaction telephone unit. In this step, entry of the demanded amount for payment becomes possible, and if the demanded amount for payment is entered thereafter, the amount to be paid is temporarily stored in the memory 506. Then, after a machine ID is sent together with a payment command to the IC card 1 (step T203), the ordinary transaction telephone unit waits for receiving an amount of money in the second purse sent from the IC card 1 (step T204).

The IC card 1 determines, when having received the ID and a command for payment (step C202), whether an area ID is included in the command for payment or not (step C203). If it is determined that the area ID is included in the payment command (step C203), an address of the second purse is read out from the second directory D2 (step C204), and on the other hand, if it is determined that the area ID is not included therein (step C203), this transaction is terminated.

When the processing shifts to step C205, determination is made as to whether the received machine ID coincides with the machine ID of the second directory D2 or not. If it is determined that both of the machine IDs coincide with each other, in step C206, the balance is read from the second purse area 106B according to the second purse address, and at the same time the balance is outputted to the ordinary transaction telephone unit.

The ordinary transaction telephone unit displays, when having received the balance of the second purse from the IC card 1 (step T205), the received amount on the display 502 (step T206). Then, the ordinary transaction telephone unit starts services concerning telephone functions.

The ordinary transaction telephone unit detects, after the services are started, an amount of unit services according to calls and updates a charging counter according to controls for message units (step T207). Then, a value on the charging counter updated every moment is subtracted from the balance in the second purse, namely the amount appearing on the display 502 (received amount of money), and until the usable amount of money obtained from the result reaches zero (step T208), or until the end of service is detected (step T210), the processing for updating the charging counter in step T207, computing of the usable amount of money in step T208, and displaying the usable amount of money in step T209 (displayed on a display work area of the display 502) are executed.

Then, when the usable amount of money reaches zero (step T208), or when the end of service is detected (step T210), the processing shifts to step T211, and waits for reception of a request for an amount to be paid (step T211). When the request for the amount to be paid is received as described above (step T211), a value on the charging counter is read and the value is sent to the IC card 1 as a demanded amount for payment (step T212).

The IC card 1 has already received the payment command from the ordinary transaction telephone unit (step C207), and further receives the demanded amount for payment (step C208). In this case, the IC card 1 subtracts the received amount for payment from the balance in the second purse, and stores the amount of money obtained as a result in the work area W1 (step C209).

Then, if the amount of money stored in the work area W1 is zero or plus (step C210), payment is possible, so that information indicating that the payment is possible and the amount for payment are reported to the ordinary transaction telephone unit (step C211). Then, a standby state is effected for waiting for reception code. On the other hand, if the amount of money in the work area W1 is minus (step C210), this transaction is regarded as invalid and the processing is terminated.

The ordinary transaction telephone unit displays, when having received the amount for payment from the IC card 1 as a payable amount (step T213), the received amount for payment on the display 402 so that the user can check (step T214) . Then, a standby state is effected for waiting for validation by means of an operation with an Enter key provided in the equipment 503 for controlling services for telephone unit/message units (step T215). When the user operates the Enter key, the operation for the validation is accepted (step T215), acknowledgement is sent to the IC card 1 (step T216), and further reception code indicating completion of receiving the amount to be paid is sent thereto (step T217).

The IC card 1 further receives, when reception of the acknowledgement is accepted within a preset period of time (step C212), the reception code (step C214). It should be noted that, if the acknowledgement can not be accepted within the preset period of time, this transaction is regarded as invalid, so that the work area W1 is cleared (step C213), and the processing is terminated.

After the reception code is received in step C214, the processing shifts to step C215, and an amount stored in the work area W1 is stored in the second purse area 106B. With these operations, the amount to be paid required for exchanging with some service is taken out from the second purse. Then, the history on this transaction (date or the like) is stored in the third purse area 106C (step C216), and finally, the transaction-completion signature code is sent to the ordinary transaction telephone unit (step C217).

The ordinary transaction telephone unit prepares, when having received the transaction-completion signature code from the IC card 1, historical information on its own transaction, updates the balance and prints a receipt (step T218), and finally, returns the IC card 1 from the IC card reader/writer 501 (step T219).

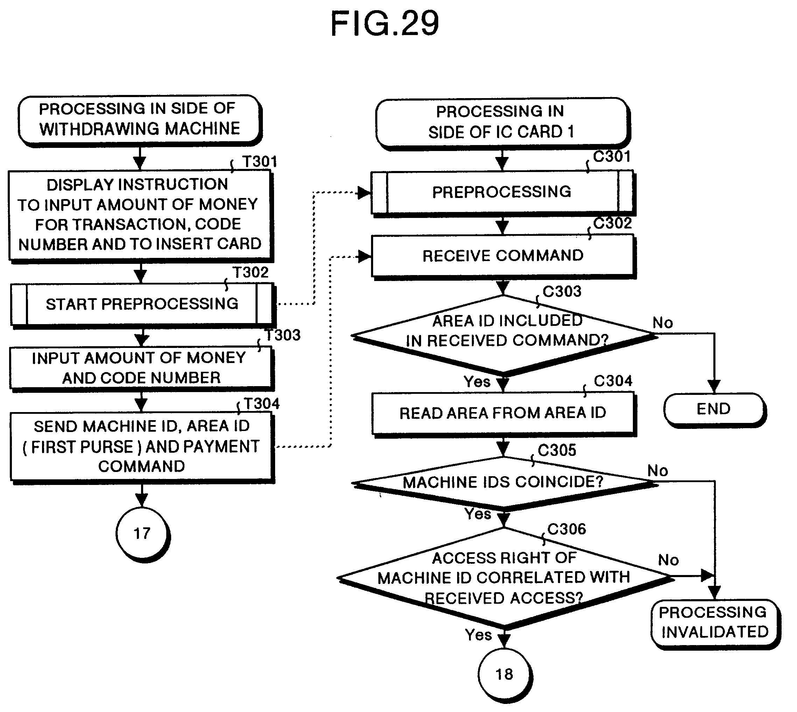

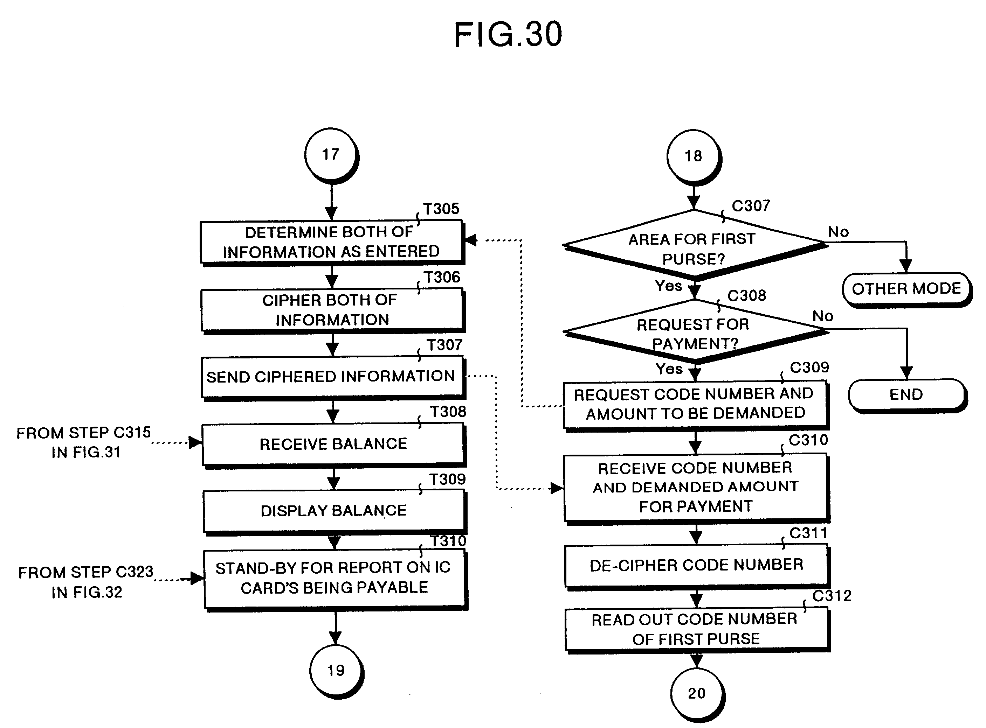

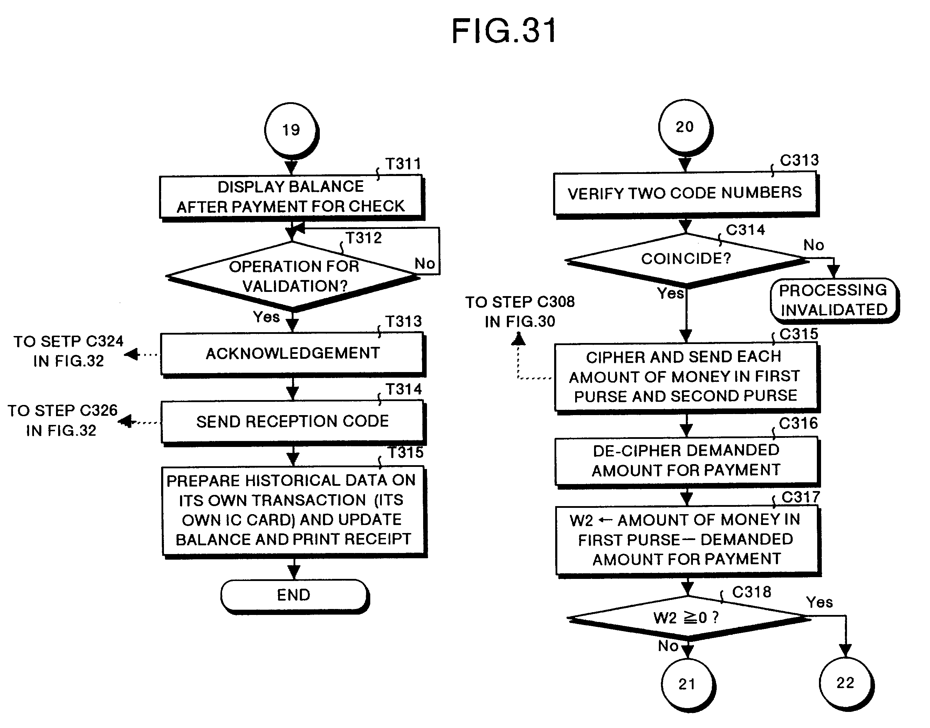

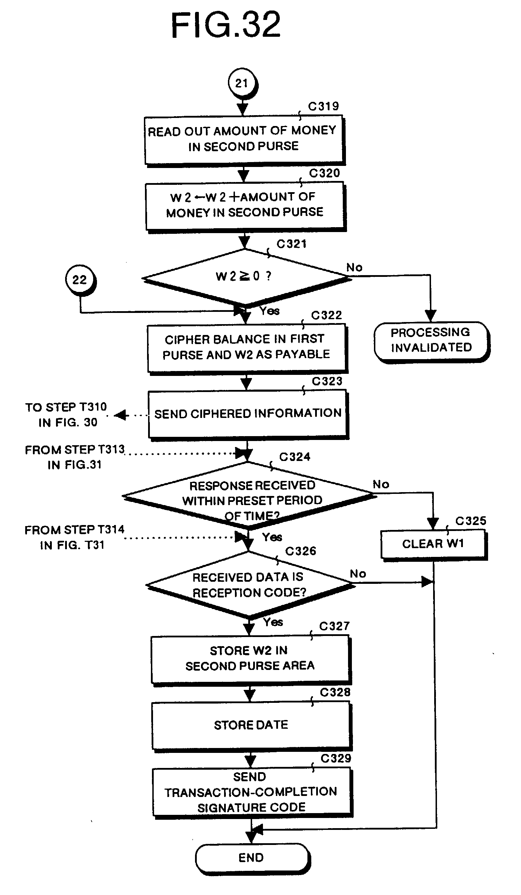

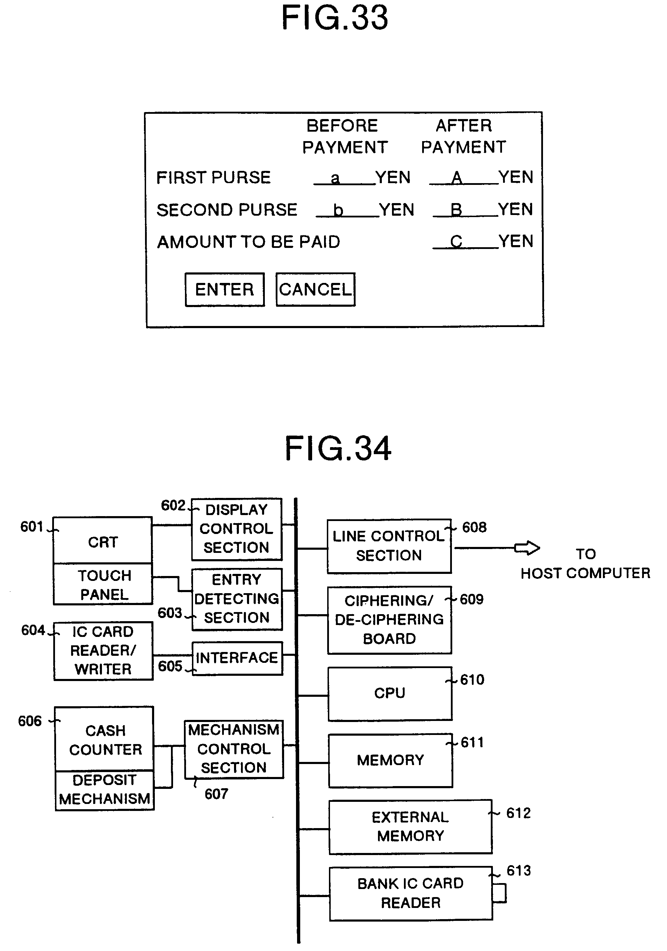

Next description is made for operations of the withdrawing machine 2. Fig. 29 to Fig. 32 are flow charts each for explaining operations for a transaction between the withdrawing machine and the IC card 1 in Embodiment, and Fig. 33 is a view showing one example of a display screen during the operations for a transaction by the withdrawing machine in Embodiment.

The flow charts shown in Fig. 29 to Fig. 32 show an example of which the withdrawing machine 2 is used as a deposit withdrawing machine. The withdrawing machine 2, at first, in order to execute a withdrawal transaction with the IC card 1, provides display on an amount of money for the transaction as well as a code number, and provides an instruction to insert a card thereinto on the display screen (step T301). After the information is displayed, the withdrawing machine 2 starts the preprocessing (step T302). The IC card 1 also executes the preprocessing in accordance with the operation in the withdrawing machine 2 (step C301).

Then, the withdrawing machine 2 sends, after the amount of money and code number are inputted (step T303), the payment command with the machine ID as well as the area ID (the first purse is specified) included therein to the IC card (step T304).

The IC card 1 reads, when having received the payment command from the withdrawing machine 2 (step C302), because the area ID is included in the received payment command (step C303), an area indicated by the area ID (step C304).

The IC card 1 reads a machine ID in the payment command and compares the machine ID to the machine ID of the first directory D1. In this case, if it is determined that both of the machine IDs coincide with each other (step C305), further a correlation between the access right of the machine ID and the received access is verified (step C306) . It should be noted that, if it is verified that both of the machine IDs do not coincide with each other (step C305), this transaction is regarded as invalid and invalidated.

When the correlation is verified in step C306, the processing further shifts to step C307. If it is determined in step C307 that the area read in step C304 is the first purse, the processing shifts to step C308, and if not, the processing executes other mode.

When the processing shifts to step C308, the contents of a demand from the withdrawing machine 2 is determined. In this case, because the withdrawing machine 2 has sent the payment command to the IC card, it is determined that the request is a payment. Accordingly, description is made only for the payment with reference to the figures (Refer to Fig. 29, Fig. 30 and Fig. 31), and other operations such as transfer or a card deposit follow the operations of the IC card 1 as described above.

In a case of the demand for payment, the processing for payment in Fig. 12 and Fig. 13 having already been described is started. In the payment processing, at first, a code number and an amount to be demanded are requested to the withdrawing machine 2 (step C309).

The withdrawing machine 2 determines, when having received the request for a code number and an amount for payment from the IC card 1, whether both of the information have already been entered or not (step T305). In this case, both of the information have already been entered in step T303, so that the processing shifts to the next step T306. In step T306, both of the information, namely the code number and the amount to be paid are ciphered, and in step T307, the ciphered information is sent to the IC card 1.

The IC card 1 at first de-ciphers, when having received the code number and the demanded amount for payment (step C310), the code number (step C311). When the code number is de-ciphered as described above, and then in step C312, the code number stored in the first directory D1 is read out, and the code number is de-ciphered.

Further, verification is made between the de-ciphered code number of the IC card 1 and the de-ciphered code number received from the withdrawing machine 2 (step C313), and if it is determined that both of the code numbers coincide with each other (step C314), the authorization is regarded as successful, and the processing shifts to step C315. On the other hand, if it is determined that the authorization is not passed, this transaction for payment is regarded as invalid and invalidated.

Further, in the IC card 1, each balance of the first purse area 106A as well as of the second purse area 106B is ciphered and sent to the withdrawing machine 2 (step C315). With those operations, the withdrawing machine 2 presents, when having received each balance of the first purse as well as the second purse from the IC card 1 (step T308), the balances remaining in the first purse as well as in the second purse to the user by displaying the balances on the display (step T309). Then, the withdrawing machine 2 waits for a report on IC card's being payable from the IC card 1 (step T310).

In the IC card 1, the received and demanded amount for payment is de-ciphered (step C316). Then, the demanded amount for payment is subtracted from the balance stored in the first purse area 106A, and the amount of money after the subtraction is stored in the work area W2 (step C317).

Then, if the amount of money stored in the work area W2 is zero or plus (step S318), payment is possible, so that information indicating that the payment is possible, the balance in the first purse, and the amount of money stored in the work area W2 are ciphered respectively (step C322). Each information ciphered as described above is sent to the withdrawing machine 2 as ciphered information (step C323) . On the other hand, if the amount of money in the work area W2 is minus (step C318), the processing shifts to step C319 and the additional transactions shown in Fig. 14 are executed.

Namely, the IC card 1 further reads the balance from the second purse area 106B (step C319), and adds the amount of money to the amount stored in the work area W2, and sets the total amount to be an amount stored in the work area W2 (step C320). After this operation, if the amount stored in the work area W2 is zero or changed to plus, the IC card 1 is payable in step C322 and step C323, so that the IC card executes the processing for ciphering the balance in the first purse as well as the amount stored in the work area W2 and sending the ciphered information to the machine.

The withdrawing machine 2 displays, when having received the ciphered information from the IC card 1 and ensuring that the card is payable (step T310), as shown in Fig. 33, the balances before payment and after the payment for checking based on the amount of money in the work area W2 (step T311).

In display of the balances for checking, amounts of money (indicated by Yen as one example) before payment and after the payment in the first purse as well as in the second purse respectively appear on the display, and an amount to be paid, an icon "Enter" for an operation of validation, and an icon "Cancel" for an operation of cancellation further appear thereon. These operations are executed with a key-control panel not shown in the figure. In the example shown in Fig. 33, the amounts of money before and after the payment in the first purse are a-Yen and A-Yen respectively, and the amounts of money before and after the payment in the second purse are b-Yen and B-Yen respectively. Further, the amount to be paid is C-Yen.

Then, the withdrawing machine 2 waits for an operation of validation by the user (step T312), accepts the operation for the validation and at the same time sends acknowledgement to the IC cards (step T313), and also sends the reception code thereto (step T314). The reception code proves that a payment is surely received from the IC card 1.

In the IC card 1, if the response is not received from the withdrawing machine 2 within the preset period of time after the ciphered information is sent in step C323 (step C324), the processing shifts to step C325, and the work area W2 is cleared in order to make this transaction for payment invalid. On the other hand, if reception of the response is ensured in step C324, determination is made as to whether the information received with the response is reception code or not (step C326).

If the received information is reception code, the transaction for payment is regarded as valid, so that the ciphered amount of money in the work area W2 is stored in the first purse area 106A (step C327). As described above, the balance in the first purse area 106A is updated according to the demanded amount for payment.

Further, information such as a date of transaction for transfer is stored in the third purse area 106C as historical information (step C328). Finally, the transaction-completion signature code is sent to the withdrawing machine 2 to report that the processing inside the IC card 1 is completed (step C329).

The withdrawing machine 2 prepares, when having received the transaction-completion signature code from the IC card 1, historical information on its own transaction, records the history in the IC card, updates the balance, and prints a receipt, and then the processing is ended (step T315).

Next description is made for the withdrawing machine 2 with an application thereof. Fig. 34 is a block diagram showing an example of configuration of an ATM (Automatic Teller Machine) as one example of the withdrawing machine in Embodiment.

The ATM shown in Fig. 34 comprises a CRT/touch panel 601, a display control section 602, an entry detecting section 603, an IC card reader/writer 604, an interface 605, a cash counter/deposit mechanism 606, a mechanism control section 607, a line control section 608, an ciphering/de-ciphering board 609, a CPU 610, a memory 611, an external memory 612, a bank IC card reader 613.

The CRT/touch panel 601 is used for entering information and various operations by touching the display screen. The display control section 602 provides controls for a CRT display of the CRT/touch panel 601, and the entry detecting section 603 detects a touch-entry through the CRT/touch panel 601. The IC card reader/writer 604 has an IC card 1 inserted therein, and reads information from and writes information in the IC card 1. The interface 605 manages interface between an IC card 1 and the inside of the ATM.

The cash counter/deposit mechanism 606 comprises a cash counter for counting an amount of money for payment and a control mechanism for counting an amount of money and paying the amount in an account. The mechanism control section 607 provides controls over the cash counter/deposit mechanism 606. The line control section 608 provides controls for communications with the host computer 31 of the central system 3 through the line. The ciphering/de-ciphering board 609 ciphers and de-ciphers information for a transaction.

The CPU 610 provides controls over the machine on the whole. The memory 611 comprises a ROM for storing therein a program with which the CPU 610 operates and a RAM used as a work area of the CPU 610. The external memory 612 is a high-capacity memory such as a hard disk. The back IC card reader 613 has an ordinary bank card inserted therein for operating a sequence for on-line banking and reads information on authorization from the card.

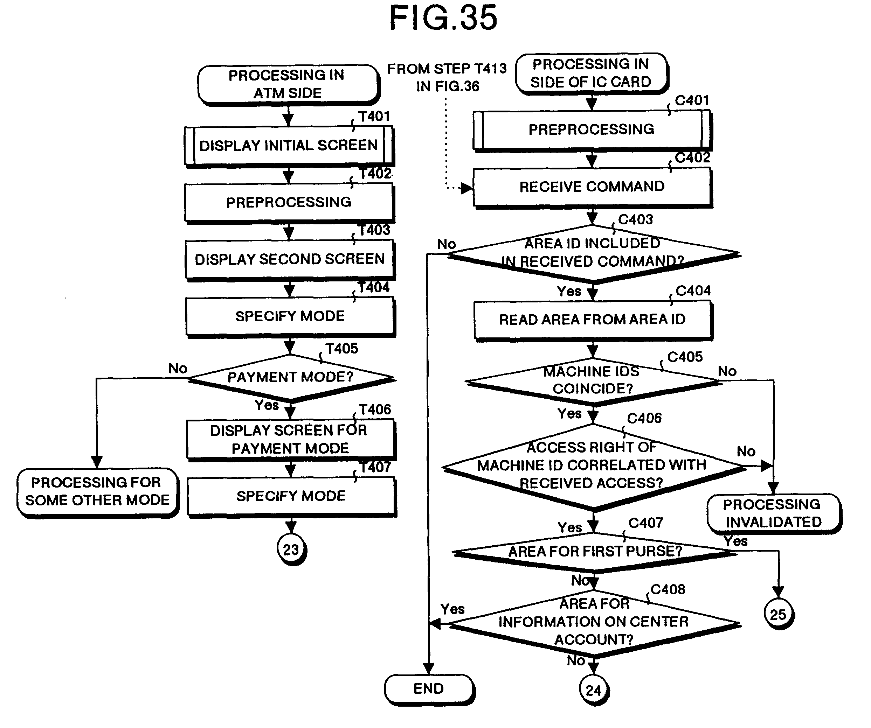

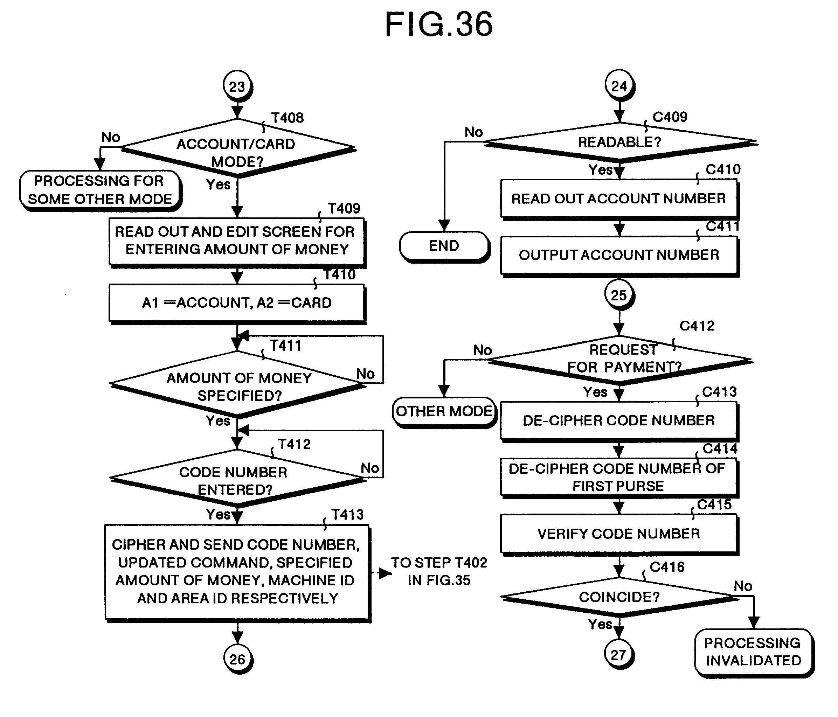

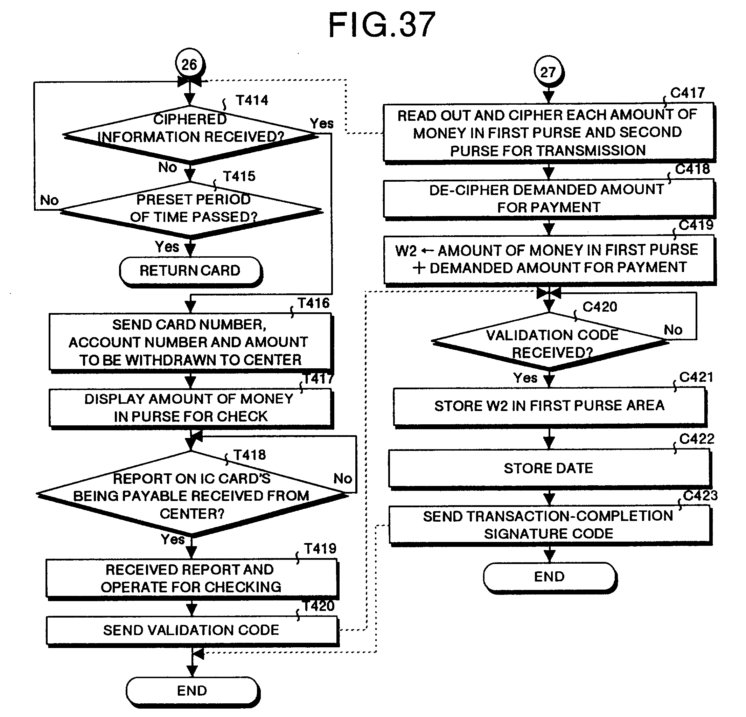

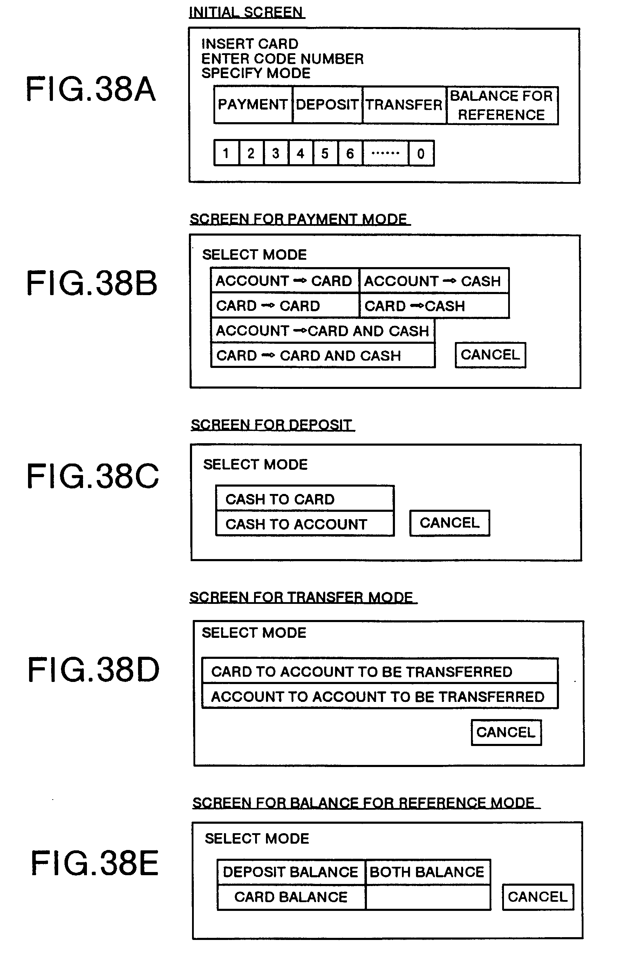

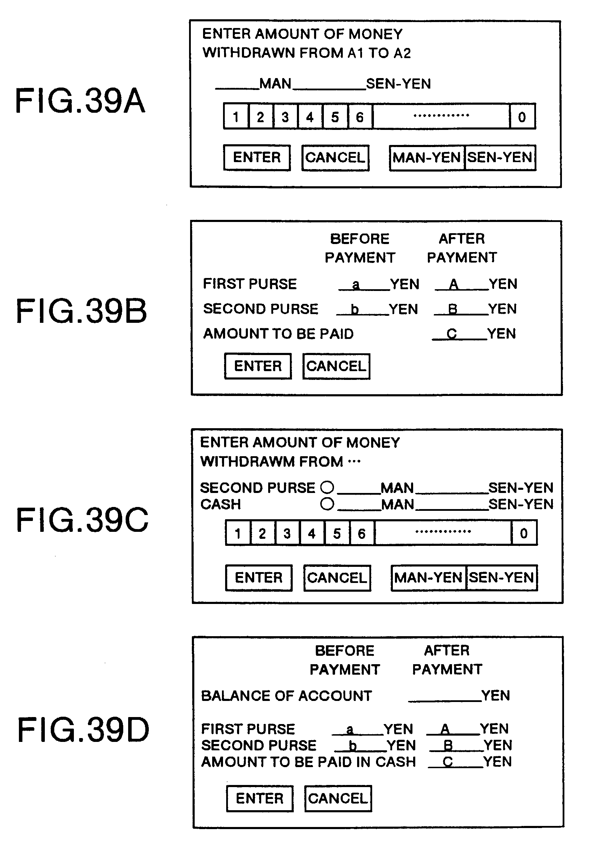

Next description is made for operations of the ATM. Fig. 35 to Fig. 37 are flow charts each for explaining operations for a transaction between the ATM shown in Fig. 34 and an IC card, and Figs. 38A to 38E and Figs. 39A to 39D are views each showing one example of a display screen during the operations for a transaction by the ATM in Embodiment.

At first, the ATM provides, to transact for withdrawal with an IC card 1, as shown in Fig. 38A, an initial screen with an instruction of inserting a card therein, an entry of a code number and an entry of a mode provided on the CRT/touch panel 601 (step T401). After this initial screen is provided thereon, the ATM starts preprocessing (step T402). In accordance with it the IC card 1 also executes preprocessing (step C401).

Then, the ATM displays a second screen by deleting the instruction of card insertion or the like (step T403). Then, when one of modes (Payment, Deposit (card deposit), Transfer, Balance for reference) is specified through a touch operation onto the CRT/touch panel 601 (step T404), determination is made which mode the specified mode is (step T405) . Herein the mode assumes a payment mode. Accordingly, if any mode other than the payment mode is specified, the figure and description thereof are omitted as processing for some other mode.

It should be noted that, if a deposit mode is specified as one of other modes, as a screen for a deposit mode shown in Fig. 38C, there appear a mode for transfer of cash , "Cash to IC card", and a mode for transfer of cash, "Cash to Account", as further detailed modes. If the transfer mode is specified, as a screen for a transfer mode shown in Fig. 38D, there appear a mode for transfer of an amount "IC card to Account to be transferred" and a mode for transfer of an amount "Account to Account to be transferred" as further detailed modes. Also, if the balance for reference mode is specified, as shown in Fig. 38E, there appear three modes such as a mode for "Deposit Balance", a mode for "IC card Balance", and a mode for "Both Balances" as further detailed modes.

If the payment mode is specified (step T405), as shown in Fig. 38B, a screen for a payment mode is formed on the CRT/touch panel 601 (step T406) . Then, a further detailed mode is specified on this payment mode screen.

Namely, there appear on the payment mode screen six types of mode such as "Account to IC card", "Account to Cash", "IC card to IC card", "IC card to Cash", "Account to IC card and Cash", and "IC card to IC card and Cash" (described as "Card" in place of "IC card" in Figs. 38B to Fig. 38E). A user specifies a desired mode out of the six types of mode through a touch operation. Herein, a case where a mode "Account to IC card" is specified is taken up as an example for description, and figures and description of other modes are omitted herein as other modes.

When the "Account/Card" mode is specified, a screen for entering an amount of money as shown in Fig. 39A appears on the CRT/touch panel 601, and an operation to the screen for entering an amount of money and editing of the screen are executed (step T409). There appear on the screen for entering an amount of money shown in Fig. 39A an instruction to enter an amount of money to be withdrawn from Al (one side as an example) to A2 (the other side as an example), numeric keys for entering an amount of money, keys for entering a unit of an amount of money (e.g. "Man-Yen" indicating ten thousand yen, and "Sen-Yen" indicating one thousand yen), an Enter key pressed after the amount of money is entered, and a Cancel key for canceling this mode. Any of displays can be realized with touch-entry.

Because the specified mode is the "Account/Card" mode herein, "Account" is set in Al, and "Card" (which means an IC card) is set in A2 (step T410). Then, the processing waits for specification of an amount of money by the user on the screen for entering an amount (step T411). Then, when an amount of money is entered (step T411), the processing further waits for entry of a code number by the user (step T412).

The ATM sends, after an amount of money is specified and a code number is entered (step T411 and step T412), an update command including the code number, a demanded amount for payment (a specified amount of money), a machine ID, and an area ID (the first purse is specified herein) to the IC card (step T413). It should be noted that the reason why the update command is used herein is because balances in Al and A2 are updated in accordance with transfer of an amount of money from Al to A2. It should be noted that this update command identifies the mode specified in step T405.

The IC card 1 reads, when having received a payment command from the ATM (step C402) and as an area ID is included in the received update command (step C403), an area indicated by the area ID (step C404).

The IC card 1 reads a machine ID in the update command and compares the machine ID to the machine ID of the first directory D1. In this case, if it is determined that both of the machine IDs coincide with each other (step C405), further a correlation between the access right of the machine ID and the received access is verified (step C406) . It should be noted that, if it is verified that both of the machine IDs do not coincide with each other (step C405), this withdrawal transaction is regarded as invalid and invalidated.

When the correlation is verified in step C406, the processing further shifts to step C407. If it is determined in step C407 that the area read in step C404 is the first purse, the processing shifts to step C408, and if not, the processing shifts to step C412 and identification is made as to whether the specified mode is a payment mode or not.

When the processing shifts to step C408 in the IC card 1, determination is made as to whether the area ID specifies the third purse, namely information on the center account or not. According to the above operational flow, the area ID is the first purse, so that, in this case also, this transaction is regarded as invalid and the processing is terminated. If it is determined that the third purse is specified, the processing further shifts to step C409 and authenticates an access right to information on the center account. Then, if the ATM is a readable machine (step C409), an account number is read out in step C410, and the account number is outputted to the ATM (step C411). After the operations, this transaction is ended.

If it is determined in step C407 that the area ID specifies the first purse, the processing shifts to step C412, and then the demanded contents is determined. In the above operational flow, it is determined that the demand is a payment. Accordingly, only the processing for payment is described in details herein (Refer to Fig. 29, Fig. 30, and Fig. 31) herein, and also it is assumed herein that other processing such as Transfer to other account or Card deposit are the same as the operations of the IC card 1 as described above.

In a case of a demand for payment, the processing for payment shown in Fig. 12 and Fig. 13 having been described before is started. The IC card 1 has already received a code number and a demanded amount for payment in step C401. Accordingly, at first, the code number is de-ciphered (step C413), then in step C414, a code number stored in the first directory D1 is read, and the code number is de-ciphered.

Further, verification is made between the de-ciphered code number of the IC card itself and the de-ciphered code number received from the ATM (step C415), and if both of the code numbers coincide with each other (step C416), the authorization is regarded as successful and the processing shifts to step C417. On the other hand, when the authorization is not successful, this transaction for payment is regarded as invalid and invalidated.

Further, the IC card 1 ciphers each balance in the first purse area 106A as well as the second purse area 106B and sends the ciphered balances to the ATM (step C417).

The ATM waits for, after the ciphered information is sent in step T413, receiving the balances (ciphered information) in the first purse and the second purse from the IC card 1 (step T414). If the time for waiting is over the preset period of time, the processing shifts to the step for returning a card and is forcefully terminated.

The ATM sends, when having received the balances (ciphered information) in the first purse and the second purse from the IC card 1 within the preset period of time (step T414), at first, the code number, information on an account, and the amount to be withdrawn to the central system 3 (step T416). It should be noted that information on an account can be obtained by making the IC card 1 execute the step C 408 to step C411. Then, the received balances are displayed, as shown in Fig. 39B, on the CRT/touch panel 601 (step T417). Then, the ATM waits for a report on IC card's being payable from the central system 3 (step T419).

The IC card 1 de-ciphers, after the ciphered information is sent in step C417, the demanded amount for payment having been received (step C418). Then, the de-ciphered amount for payment is added to the balance stored in the first purse area 106A, and the total amount is stored in the work area W2 (step C419). Then, the system waits for receiving validation code from the ATM (step C420).

The ATM sends, when having received the report on IC card's being payable from the central system 3 (step T418), the validation code to the IC card 1 (step T420) according to the operation for checking by the user (step T419). Then, when having received transaction-completion signature code from the IC card 1, the ATM executes the processing for preparing historical information on that transaction and the processing in the ATM side is ended.

In the IC card 1, when the validation code is received from the ATM (step C420), the transaction for payment is regarded as valid, and the ciphered amount of money stored in the work area W2 is stored in the first purse area 106A (step C421). As described above, the balance in the first purse area 106A is updated according to the amount of money to be paid from the account to the IC card.

Further, stored in the third purse area 106C is information on the date of the transaction for transfer as historical information (step C422). Finally, transaction-completion signature code is sent to the ATM to report that the processing inside the IC card 1 is completed to the ATM (step C423).

The processing described above has assumed a case of the payment mode from an account to an IC card as an example, but if the mode is other one such as a payment mode from an account to an IC card as well as to cash, or from an IC card to an IC card as well as to cash, a display screen shown in Fig. 39C is formed. In this case, concerning the purse to which payment is made (e.g. the second purse is allowable) or cash, each amount of money to be withdrawn can be specified respectively.

Only the balances in the purses are displayed on the screen shown in Fig. 39B, but as shown in Fig. 39D, the balance in an account after completion of a transaction may be displayed thereon.

As described above, with this embodiment, the characteristics as a double-structured purse (IC card) are made use of, and for this reason it is possible to improve the convenience in use as a prepaid card in the second purse with lower security and to further improve the security in the first purse with higher security.

When the device in the user's side demands the processing for payment without specifying any area, it is possible to realize, by using a deposited amount in the second purse, a simple and less-secured transaction which does not require personal authorization.

With the IC card 1, much expense in time and effort such that a code number needs to be verified for the second purse with lower security is omitted, and for this reason convenience in use can be improved and at the same time the first purse with higher security can be prevented from illegal access by requiring personal authorization and using a code number.

In a transaction between a transaction apparatus and an IC card, when specification of an arbitrary mode is accepted within a preset period of time, using a center account is allowed, and when the specification is not accepted, the mode is switched to payment in cash, so that a transaction through a center account has variations in modes, and simplification of the transaction in cash can be realized by omitting operations required for specifying the transaction in cash.

In a transaction requiring personal authorization between a transaction apparatus and an IC card, the transaction is executed again by making use of an amount of money in the second purse even if the transaction is not performed only through the first purse, so that a user can execute a transaction without being concerned about an amount of money for the transaction, and for this reason improvement in the operability can be achieved.

In a transaction between a transaction apparatus and an IC card, amounts of money for the first and the second purses are outputted to the transaction apparatus only when the personal authorization is executed, and if not, only an amount of money for the second purse is outputted to the transaction apparatus, so that the first purse with high security can be prevented from being opened unless the information can pass through the operations for the personal authorization even if a transaction is such a small one that contents of the purse is let to know to a transaction apparatus for an inquiry or the like.

Although the description has been made for the present invention with Embodiment, it is to be understood that various types of modification may be resorted without departing from the scope of the present invention as claimed, and that those modifications are not to be excluded from the scope of the present invention.

As described above, with the electronic purse system having a double-structured purse according to the present invention, the characteristics as a double-structured purse are made use of, and for this reason it is possible to obtain an electronic purse system having a double-structured purse in which the convenience in use as a prepaid card can be improved in a purse with lower security, on the other hand, the security can further be improved in a purse with higher security.

In the electronic purse system having a double-structured purse according to the present invention, a program making the second area allow only the withdrawal processing may be stored in the second non-volatile memory of the card-formed carrier body.

In the electronic purse system having a double-structured purse according to the present invention, identification information for a device in the user's side and a code number each allowing access to a third area are registered in the third area provided in the card-formed carrier body, and addition or subtraction in the third area may be allowed when identification information and a code number corresponding to registered information are received from the device in the user's side.

In the electronic purse system having a double-structured purse according to the present invention, identification information indicating the device in the user's side subjected to addition and an amount of added money may be stored as historical information in the third area of the card-formed carrier body.

With the electronic purse system having a double-structured purse according to the present invention, it is possible to obtain an electronic purse system having a double-structured purse in which, when the device in the user's side demands the processing for payment without specifying any area, a simple and less-secured transaction which does not require personal authorization can be realized by using a deposited amount in the second area.

With the IC card applicable to an electronic purse system having a double-structured purse according to the present invention, it is possible to obtain an IC card applicable to the electronic purse system having a double-structured purse in which much expense in time and effort such that a code number needs to be verified for the second purse with lower security is omitted so that convenience in use can be improved, and at the same time the first purse with higher security can be prevented from illegal access by requiring personal authorization.

With the IC card applicable to an electronic purse system having a double-structured purse according to the present invention, it is possible to obtain an IC card applicable to the electronic purse system having a double-structured purse in which much expense in time and effort such that a code number needs to be verified for the second purse with lower security is omitted so that convenience in use can be improved, and at the same time a function of preventing illegal access can further be improved in the first purse with higher security by using ciphered information.

With the IC card transaction apparatus according to the present invention, in a transaction between a transaction apparatus and an IC card, when specification of an arbitrary mode is accepted within a preset period of time, using a center account is allowed, and when the specification is not accepted, the mode is switched to payment in cash, so that it is possible to obtain an IC card transaction apparatus in which a transaction through a center account has variations in modes, and simplification of the transaction in cash can be realized by omitting operations required for specifying the transaction in cash.

With the IC card transaction apparatus according to the present invention, in a transaction requiring personal authorization between a transaction apparatus and an IC card, the transaction is executed again by making use of an amount of money in the second purse even if the transaction is not performed only through the first purse, so that it is possible to obtain an IC card transaction apparatus in which a user can execute a transaction without being concerned about an amount of money for the transaction and for this reason improvement in the operability can be achieved.

With the IC card applicable to an IC card transaction system according to the present invention, in a transaction between a transaction apparatus and an IC card, amounts of money for the first and the second purses are outputted to the transaction apparatus only when the personal authorization is executed, and if not, only an amount of money for the second purse is outputted to the transaction apparatus, so that it is possible to obtain an IC card applicable to the IC card transaction system in which the first purse with high security can be prevented from being opened unless the information can pass through the operations for the personal authorization even if a transaction is such a small one that contents of the purse is let to know to a transaction apparatus for an inquiry or the like.

This application is based on Japanese patent application No. HEI 9-268891 filed in the Japanese Patent Office on October 1, 1997, the entire contents of which are hereby incorporated by reference.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. An electronic purse system having a double-structured purse comprising:
a portable type of card-formed carrier body comprising a first rewritable and non-volatile memory in turn having a first area in which a first deposited amount is stored and a second area in which a second deposited amount is stored, and an I/O terminal for accessing information stored in said first and second non-volatile memories respectively; when accessing said first area, ciphered information received from said I/O terminal is de-ciphered, access is permitted if a code number included in the de-ciphered information satisfies a prespecified relation, and when accessing said second area, access to said second area is permitted if an identification number indicating a type of accessible transaction apparatus;
a withdrawing machine for transferring all or a portion of a deposited amount to the first area of the memory in said card-formed carrier body, which ciphers at least either one of identification information for the apparatus and a code number inputted by the card holder and transfers the ciphered information or number to said card-formed carrier body;
an input unit for inputting a code number and a amount of money to be transferred from said first area to said second area in said card-formed carrier body;
a transfer unit for supplying the code number, amount of money to be transferred, and identification information inputted by said input unit to said card-formed carrier body; and
a device in the user's side for transmitting an amount of money used and the apparatus information to use a deposited amount stored in the second area of said card-formed carrier body; wherein said card-formed carrier body updates said first area, when transfer is instructed by said transfer unit and said individual's authorization number is accepted, by subtracting a specified amount of money from the deposited amount stored in said first area, and also writes the specified amount of money in said second area, and allows, when an amount of money to be used is instructed from said device in the user's side and at the same time access to said second area is permitted according to said identification information, use of the instructed amount of money with said device in the user's side by subtracting said amount of money to be used.

2. An electronic purse system having a double-structured purse according to claim 1; wherein said card-formed carrier body has a program making said second area allow only the withdrawal processing stored in said second non-volatile memory.

3. An electronic purse system having a double-structured purse according to claim 1; wherein said card-formed carrier body has further a third area in said first non-volatile memory with identification information for a device in the user's side and a code number each allowing access to said third area registered in said third area, and a program for allowing addition or subtraction in said third area when identification information and a code number corresponding to information registered from said device in the user's side are inputted is stored in said second non-volatile memory.

4. An electronic purse system having a double-structured purse according to claim 3; wherein said card-formed carrier body stores in said third area identification information indicating said device in the user's side subjected to addition and an amount of added money as historical information.

5. An electronic purse system having a double-structured purse according to claim 2; wherein said card-formed carrier body skips, when said device in the user's side demands payment without specifying any area in said first non-volatile memory, the processing for de-ciphering the transferred information from said device in the user's side, and allows transaction for subtracting information on the specified amount of money from said second deposited amount.

6. An IC card applicable to an electronic purse system having a double-structured purse comprising:
a memory in which a first purse with a first amount of money stored therein, a second purse with a second amount of money stored therein, a payment processing program and cipher program are stored;
processor for executing said payment processing program and cipher program;
communicating means for executing communications with external devices;
wherein according to said payment processing program, said processor takes a steps of;
distinguishing said external device communicating between first type of transaction using only said second purse being allowed and second type of transaction using both of said first and said second purse being allowed;
executing payment processing program with ciphering at least a part of communication data for said external device being allowed to proceed said second type of transaction during the payment transaction; and
executing payment processing program without ciphering communication data for said external device being allowed to proceed said first type of the transaction.

7. An IC card applicable to an electronic purse system having double-structured purse according to claim 6, further comprising:
said memory storing key information in a read protection area protected to read from said external device for said cipher program which is commonly embodied in the authorized external devices for the electric money transaction; and
said cipher program ciphering the transaction data using said key information stored said memory.

8. An IC card applicable to an electronic purse system having a double-structured purse comprising:
a memory in which a first purse with a first amount of money stored therein, a second purse with a second amount of money stored therein, and a payment processing program are stored;
a processor for executing payment processing according to the payment processing program stored in said memory;
a communicating unit for executing communications with external devices; wherein said payment program executes payment processing according to the second amount of money stored in said second purse when a payment command is received from an external payment demanding device without any purse being specified, and executes the payment processing to said external device according to the amount of money stored in said first purse when a payment command based on specification of said first purse is received.

9. An IC card applicable to an electronic purse system having a double-structured purse comprising:
a memory in which a first purse with a first amount of money stored therein, a second purse with a second amount of money stored therein, a payment processing program, and an ciphering/de-ciphering program are stored;
a processor for executing payment processing according to the payment processing program stored in said memory;
a communicating unit for executing communications with external devices; and
an interface for managing interface with external transaction devices; wherein said payment program executes the payment processing according to the second amount of money stored in said second purse when a payment command not based on specification of the first purse is received via said interface from an external device, and communicates with the external device using said ciphering and de-ciphering program and executes the payment processing to said external device according to the amount of money stored in said first purse when a payment command based on specification of said first purse is received.

10. An IC card transaction apparatus for selecting either one of an amount of money stored in an IC card and an amount of money stored in a center account and executing payment in cash according to the selected amount of money comprising:
a detector for detecting insertion of an IC card;
an acceptor for accepting specification of an arbitrary mode after insertion of said IC card is detected by said detector; and
a mode switch for switching from said center account to a mode for payment in cash when specification of an arbitrary mode is not accepted in said acceptor within a preset period of time after insertion of said IC card is detected.

11. A transaction apparatus for executing transaction with an IC card having a first purse and a second purse; wherein said transaction apparatus executes transaction making use of the amount of money stored in said second purse, when a demand for payment is received based on specification of said first purse, if it is turned out, after the demand for payment is authorized according to the ciphered information and code number, that the amount of money stored in said first purse is less than the amount of money required for the transaction.

12. An IC card applicable to an IC card transaction system, said card having a first purse and a second purse and used for transaction making use of the double-structured purse consisting of said first purse and second purse with the transaction apparatus; wherein, when a code number is received from the transaction apparatus, the processing for authorizing the individual is executed with said received code number and amounts of money to be stored in said first and second purses respectively are outputted to said transaction apparatus, and on the other hand, when a code number is not received from said transaction apparatus, an amount of money for said second purse is outputted to said transaction apparatus.
